# EUROPEAN PATENT APPLICATION

(11) **EP 4 779 485 A1**
(43) Date of publication of application: **22.07.2026**
(21) Application number: 24878800.2
(22) Date of filing: 24.09.2024
(51) Int. Cl.: G06F 15/163, G06F 15/78, G06T 1/20

(54) **FIRST CHIP, CHIP ASSEMBLY, REPLACEABLE ACCESSORY, AND COMMUNICATION METHOD**

(30) Priority: 18.10.2023 CN 202311357454
(71) Applicant: Geehy Microelectronics Inc., Zhuhai, Guangdong 519060 (CN)
(72) Inventor: HE, Xuefeng, Zhuhai, Guangdong 519060 (CN)
(74) Representative: J A Kemp LLP
(86) International application number: PCT/CN2024/120585
(87) International publication number: WO 2025/082153

(57) **Abstract**

The present application provides a first chip, a chip assembly, a replaceable accessory, and a communication method, the first chip is configured to communicatively connect with a host device and a second chip respectively, wherein the host device is configured to send a task instruction, the task instruction comprises a first instruction and a second instruction, wherein the first chip is configured to: stop sending a first control signal to the second chip when receiving the first instruction sent by the host device, so that the second chip is in an abnormal working state, and the first chip responds to the first instruction; and send the first control signal to the second chip when receiving the second instruction sent by the host device, so that the second chip is in a normal working state, and the second chip responds to the second instruction. Due to the fact that the second chip can directly respond to the second instruction without requiring the first chip for forwarding, and there is no need for protocol conversion by the first chip. Therefore, the response speed of the chip assembly can be improved.

## Description

The present application claims priority to Chinese Patent Application No. 202311357454.X, entitled "GRAFTING CHIP, GRAFTING CHIP ASSEMBLY, AND IMAGING BOX", filed with the China National Intellectual Property Administration on October 18, 2023, which is hereby incorporated by reference in its entirety.

### TECHNICAL FIELD

The present application relates to the field of communication technologies, and in particular, to a first chip, a chip assembly, a replaceable accessory, and a communication method.

### BACKGROUND

In order to enrich the characteristics of a host device, several peripheral replaceable accessories are often combined with the host device for use. When a replaceable accessory is used on the host device, the host device often needs to authenticate the source of the replaceable accessory. There is often a chip used for identity authentication in the replaceable accessory, and authentication information is stored in the chip. In addition, the chip also stores information, such as, a usage history or a lifespan of the replaceable accessory. The host devices may be an image forming apparatus, a mobile terminal, a computer, or another device, and correspondingly, the replaceable accessory may be a consumable cartridge, a headphone, a battery, a peripheral, or another module including a chip.

For environmental and economic reasons, the market seeks to reuse the replaceable accessory that have been used but not completely scrapped. For example, by replacing a consumable part within the replaceable accessory, the used component can be repaired. However, if the lifespan data recorded in the chip cannot be modified, it is often necessary to synchronously replace the used chip (old chip) in the replaceable accessory. However, the old chip is not entirely unusable. If it is simply replaced and discarded, it is environmentally unfriendly. On the other hand, if the old chip is reused directly, a part of its data may no longer be recognized by the host device, resulting in a malfunction in the replaceable accessory.

Based on this, a solution combining an old chip and a patch chip is provided in related technologies, where a chip assembly composed of the old chip and the patch chip responds to an instruction sent by the host device. Specifically, the patch chip is communicatively connected with the host device directly, while the old chip is communicatively connected with the host device indirectly through the patch chip. When the host device sends a first instruction (which requires the patch chip to respond), the patch chip directly processes the first instruction and sends first response data to the host device without the involvement of the old chip. When the host device sends a second instruction (which requires the old chip to respond), the patch chip forwards the second instruction to the old chip, the old chip processes the second instruction and sends second response data to the patch chip, and the patch chip then sends the second response data to the host device. That is to say, a part of instructions sent by the host device is responded to by the old chip, while the other part of the instructions are responded to by the patch chip.

However, as a host of the old chip, after receiving the second response data from the old chip, the patch chip needs to perform protocol conversion process on the second response data, and then act as a slave of the host device to send the processed second response data to the host device. The protocol conversion process takes a considerable amount of time, so that the overall response of the chip assembly is relatively slow. For some host devices that require high chip response speed, existing chip assemblies are difficult to meet the response speed requirements of the host devices.

It should be pointed out that the information disclosed in the background section of the present application is only intended to deepen the understanding of the general background technology of the present application and should not be construed as an admission or any form of suggestion that such information constitutes prior art that is already known to the person skilled in the art.

### SUMMARY

The present application provides a first chip, a chip assembly, a replaceable accessory, and a communication method to help solve the problem in the prior art that a chip assembly with a patch chip cannot meet the response speed requirements of some host devices for a replaceable accessory.

**In** a first aspect, an embodiment of the present application provides a first chip, the first chip is configured to communicatively connect with a host device and a second chip respectively, where the host device is configured to send a task instruction, the task instruction includes a first instruction and a second instruction, where the first chip is configured to: stop sending a first control signal to the second chip when receiving the first instruction sent by the host device, so that the second chip is in an abnormal working state, and the first chip responds to the first instruction; and send the first control signal to the second chip when receiving the second instruction sent by the host device, so that the second chip is in a normal working state, and the second chip responds to the second instruction; where the second chip in the abnormal state is unable to respond to the task instruction sent by the host device.

**In** a possible implementation, the first chip is further configured to control a total power consumption of the first chip and the second chip to remain within a preset power consumption range.

**In** a possible implementation, the first chip includes: a first terminal, where the first terminal of the first chip is configured to electrically connect with a first terminal of the host device to form a first line between the first terminal of the first chip and the first terminal of the host device; a second terminal, where the second terminal of the first chip is configured to electrically connect with a second terminal of the host device, to form a second line between the second terminal of the first chip and the second terminal of the host device; and a third terminal, where the third terminal of the first chip is configured to electrically connect with a first terminal of the second chip, and a second terminal of the second chip is configured to electrically connect with the first line or the second line; where the first chip is configured to receive the task instruction sent by the host device through the first terminal of the first chip or the second terminal of the first chip, when the task instruction is the first instruction, the third terminal of the first chip stops sending the first control signal to the first terminal of the second chip, so that the second chip is in the abnormal working state, and first response data is sent from the first terminal of the first chip and/or the second terminal of the first chip to the host device; when the task instruction is the second instruction, the third terminal of the first chip sends the first control signal to the first terminal of the second chip, so that the second chip is in the normal working state, and second response data is sent from the second terminal of the second chip to the host device.

In a possible implementation, the first chip further includes a voltage adjusting module; and a processing module, where a first output terminal of the processing module is electrically connected with the third terminal of the first chip, and a second output terminal of the processing module is electrically connected with the third terminal of the first chip through the voltage adjusting module; the processing module is configured to when receiving the first instruction sent by the host device, lead the second output terminal of the processing module to send a second control signal to the third terminal of the first chip through the voltage adjusting module, so that the first terminal of the second chip receives the second control signal; when receiving the second instruction sent by the host device, lead the first output terminal of the processing module to send the first control signal to the third terminal of the first chip, so that the first terminal of the second chip receives the first control signal; where the second chip is unable to respond to the task instruction when receiving the second control signal.

In a possible implementation, the voltage adjusting module includes a resistance component and/or a semiconductor component.

In a possible implementation, the first chip further includes an adapter terminal, and the adapter terminal of the first chip is electrically connected with the first terminal of the first chip or the second terminal of the first chip; and the second terminal of the second chip being configured to electrically connect with the first line or the second line includes: the second terminal of the second chip being configured to electrically connect with the adapter terminal of the first chip.

In a possible implementation, the second terminal of the second chip being configured to electrically connect with the first line or the second line includes: the second terminal of the second chip being configured to electrically connect with the first terminal of the first chip or the second terminal of the first chip through a connecting wire.

In a possible implementation, the second terminal of the second chip being configured to electrically connect with the first line or the second line includes: the second terminal of the second chip being configured to electrically connect with the first terminal of the host device or the second terminal of the host device through a connecting wire.

In a possible implementation, when the second terminal of the second chip is configured to electrically connect with the first line, the third terminal of the first chip stopping sending the first control signal to the first terminal of the second chip includes: controlling the second terminal of the first chip and the third terminal of the first chip to be electrically insulated, so that the third terminal of the first chip stops sending the first control signal to the first terminal of the second chip; the third terminal of the first chip sending the first control signal to the first terminal of the second chip includes: controlling the second terminal of the first chip and the third terminal of the first chip to be electrically connected, so that the third terminal of the first chip sends the first control signal to the first terminal of the second chip.

In a possible implementation, the first chip further includes a first switch, where the first switch is configured to control the second terminal of the first chip and the third terminal of the first chip to switch between being electrically connected and being electrically insulated.

In a possible implementation, when the second terminal of the second chip is configured to electrically connect with the second line, the third terminal of the first chip stopping sending the first control signal to the first terminal of the second chip includes: controlling the first terminal of the first chip and the third terminal of the first chip to be electrically insulated, so that the third terminal of the first chip stops sending the first control signal to the first terminal of the second chip; the third terminal of the first chip sending the first control signal to the first terminal of the second chip includes: controlling the first terminal of the first chip and the third terminal of the first chip to be electrically connected, so that the third terminal of the first chip sends the first control signal to the first terminal of the second chip.

In a possible implementation, the first chip further includes a second switch, where the second switch is configured to control the first terminal of the first chip and the third terminal of the first chip to switch between being electrically connected and being electrically insulated.

In a possible implementation, the first terminal of the first chip is configured to receive a first voltage output from the first terminal of the host device, and the second terminal of the first chip is configured to receive a second voltage output from the second terminal of the host device; where the first voltage is a power supply voltage and the second voltage is a ground voltage; or the first voltage is the ground voltage and the second voltage is the power supply voltage.

In a second aspect, an embodiment of the present application provides a chip assembly including the first chip according to any one of the first aspect; and a second chip; where the first chip and the second chip are communicatively connected.

In a possible implementation, the chip assembly further includes a power consumption configuring unit, configured to control a power consumption of the chip assembly to remain within a preset power consumption range.

In a third aspect, an embodiment of the present application provides a replaceable accessory for detachable installation on a host device, where the replaceable accessory includes the chip assembly according to any one of the second aspect.

**In** a fourth aspect, an embodiment of the present application provides a communication method applied to a first chip, where the first chip is configured to communicatively connect with a host device and a second chip respectively, the host device is configured to send a task instruction, the task instructions includes a first instruction and a second instruction, where the method includes: stopping sending a first control signal to the second chip when receiving the first instruction sent by the host device, so that the second chip is in an abnormal working state, and the first chip responds to the first instruction; sending the first control signal to the second chip when receiving the second instruction sent by the host device, so that the second chip is in a normal working state, and the second chip responds to the second instruction; where the second chip in the abnormal state cannot respond to the task instruction sent by the host device.

**In** the embodiments of the present application, when the task instruction sent by the host device is the first instruction, a response channel between the second chip and the host device is controlled to be disconnected, and the first chip responds to the first instruction; when the task instruction sent by the host device is the second instruction, the response channel between the second chip and the host device is controlled to be conducted, and the second chip responds to the second instruction. Due to the fact that the second chip can directly respond to the second instruction without requiring the first chip for forwarding, there is no need for protocol conversion or another related operation by the first chip. Therefore, it can improve the response speed of the chip assembly.

### BRIEF DESCRIPTION OF DRAWINGS

**In** order to more clearly illustrate the technical solution of embodiments of the present application, a brief introduction will be given to the drawings required for the embodiments. It is obvious that the drawings described below are only some embodiments of the present application. For the person skilled in the art, other drawings can be obtained based on these drawings without creative labor.
FIG. 1 is a structural block diagram of a communication system in related technologies;
FIG. 2 is a structural block diagram of another communication system in related technologies;
FIG. 3 is a structural block diagram of a communication system provided in an embodiment of the present application;
FIG. 4 is a schematic diagram of a physical connection relationship of a communication system provided in an embodiment of the present application;;
FIG. 5 is a schematic diagram of a physical connection relationship of another communication system provided in an embodiment of the present application;
FIG. 6 is a schematic diagram of a physical connection relationship of another communication system provided in an embodiment of the present application;
FIG. 7 is a schematic diagram of a physical connection relationship of another communication system provided in an embodiment of the present application;
FIG. 8 is a schematic diagram of a physical connection relationship of another communication system provided in an embodiment of the present application;
FIG. 9 is a schematic diagram of a physical connection relationship of another communication system provided in an embodiment of the present application;
FIG. 10 is a schematic diagram of a physical connection relationship of another communication system provided in an embodiment of the present application;
FIG. 11 is a schematic diagram of a physical connection relationship of another communication system provided in an embodiment of the present application;
FIG. 12 is a schematic diagram of a physical connection relationship of another communication system provided in an embodiment of the present application;
FIG. 13 is a schematic diagram of a physical connection relationship of another communication system provided in an embodiment of the present application;
FIG. 14 is a schematic diagram of a physical connection relationship of another communication system provided in an embodiment of the present application;
FIG. 15 is a schematic diagram of a physical connection relationship of another communication system provided in an embodiment of the present application;
FIG. 16 is a schematic diagram of a physical connection relationship of another communication system provided in an embodiment of the present application;
FIG. 17 is a schematic diagram of a physical connection relationship of another communication system provided in an embodiment of the present application;
FIG. 18 is a schematic flowchart of a communication method provided in an embodiment of the present application;
FIG. 19 is a schematic flowchart of another communication method provided in an embodiment of the present application;
FIG. 20 is a structural block diagram of a chip assembly provided in an embodiment of the present application;
FIG. 21 is a structural block diagram of another chip assembly provided in an embodiment of the present application;
FIG. 22 is a structural block diagram of another chip assembly provided in an embodiment of the present application;
FIG. 23 is a structural block diagram of a replaceable accessory provided in an embodiment of the present application.

### DESCRIPTION OF EMBODIMENTS

In order to better understanding of the technical solution of the present application, a detailed description of the embodiments of the present application will be provided below in conjunction with the accompanying drawings.

It should be clarified that the described embodiments are only a part of the embodiments of the present application rather than all embodiments. Based on the embodiments in the present application, all other embodiments obtained by the person skilled in the art without creative labor are within the protection scope of the present application.

The terms used in the embodiments of the present application are for the purpose of describing specific embodiments only, rather than intending to limit the present application. The singular forms of "a", "said", and "this" used in the embodiments and claims of the present application are also intended to include the majority form, unless the context clearly indicates otherwise.

It should be understood that the term "and/or" herein is only a description of an association relationship between related objects, indicating that there can be three types of relationships, for example, A and/or B, which can mean: A exists alone, A and B exist simultaneously, and B exists alone. In addition, the character "/" herein generally indicates that related objects before and after are in an "or" relationship.

For ease of understanding, the following will first explain the concepts involved in the embodiments of the present application.

Old chip: an original chip on a replaceable accessory, which may also be referred to as a "used chip", "original chip", or "second chip" in some possible implementations.

Patch chip: a newly added chip on a replaceable accessory, which may also be referred to as "regenerated chip," "grafted chip", or "first chip" in some possible implementations.

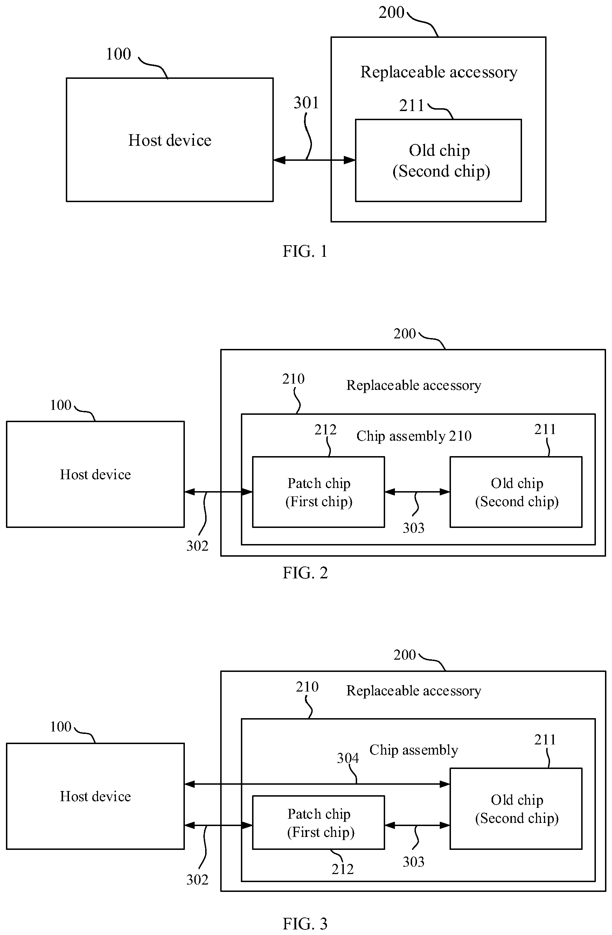

Referring to FIG. 1, which is a structural block diagram of a communication system in related technologies. As shown in FIG. 1, the communication system includes a host device 100 and a replaceable accessory 200. Exemplarily, the host device 100 may be an image forming apparatus, a mobile terminal, a computer, or another device, and correspondingly, the replaceable accessory 200 may be a consumable cartridge, a headphone, a battery, a peripheral, or another module.

Specifically, the replaceable accessory 200 includes an old chip 211, which is communicatively connected with the host device 100 via a first information transmission channel 301. It can be understood that the old chip 211 and the host device 100 may send and receive data via the first information transmission channel 301.

In some possible implementations, the old chip 211 stores identity data, encrypted data, remaining service life data, and etc. The host device 100 may authenticate the identity of replaceable accessory 200 through the identity data, achieve encrypted communication between the host device 100 and the old chip 211 through the encrypted data, and determine the remaining service life of the replaceable accessory 200 through the remaining service life data. Normally, an initial value of the remaining service life data is the maximum value (e.g., 100%), and as the replaceable accessory 200 being used, the remaining service life data gradually decreases to the minimum value (e.g., 0). It can be understood that when the remaining service life data decreases to the minimum value, it usually indicates that the replaceable accessory 200 is no longer being usable, and it is necessary to replace the replaceable accessory 200 at this time.

Exemplarily, the host device 100 is an image forming apparatus, and correspondingly, the replaceable accessory 200 is a consumable cartridge, and the remaining service life data is a remaining amount of consumables. It can be understood that the initial value of the remaining amount of consumables is usually 100%. As the consumable cartridge being used, recording materials (such as, toner or ink) in the consumable cartridge gradually decreases until it reaches 0. When the remaining amount of consumables in the consumable cartridge is 0, it means that the recording materials in the consumable cartridge has been exhausted. At this time, the consumable cartridge needs to be replaced so that the image forming apparatus can continue to perform an image forming operation.

For environmental and economic reasons, the market seeks to reuse the replaceable accessory 200 that have been used but not completely scrapped. For example, recording materials may be refilled into consumable cartridges to repair these used consumable cartridges. However, a repaired consumable cartridge may give an incorrect result when performing some tasks. For example, when the consumables cartridge is refilled with recording materials and reused, data in the old chip 211 in the consumables cartridge remains unchanged, resulting in the inability of the old chip 211 in the consumables cartridge to provide accurate information of the remaining amount of consumables, and etc. Specifically, even if recording materials has been refilled into the consumable cartridge, the image forming apparatus may still indicate a shortage of consumables, resulting in the unavailability of the consumable cartridge. At the same time, a user cannot accurately obtain the information of the remaining amount of consumables, which affects the user experience. That is to say, after the repair of the replaceable accessory 200, some data in the old chip 211 may not match the repaired replaceable accessory 200, resulting in the unavailability of the replaceable accessory 200 and affecting the user experience.

Meanwhile, due to the fact that a program and data in the old chip 211 are usually fixed and cannot be modified by a third party, it is often necessary to synchronously replace the old chip 211 after the replaceable accessory 200 is repaired. However, the data in the old chip 211 is not completely unusable. For example, the identity data and the encrypted data in the old chip 211 may still be used. In this case, directly replacing and discarding the old chip 211 is not environmentally friendly.

One solution to the above problem in related technologies is to arrange a patch chip between a host device 100 and an old chip 211. A part of instructions sent by the host device 100 (which the old chip 211 can respond to) are responded to by the old chip 211, while the other part of the instructions (which the old chip 211 cannot respond to) are responded to by the patch chip. This allows normal use of the replaceable accessory 200 while retaining the old chip 211. Below, the working principle of the patch chip will be explained in detail with reference to the accompanying drawings.

Referring to FIG. 2, which is a structural block diagram of another communication system in related technologies. As shown in FIG. 2, the difference between this communication system and the communication system shown in FIG. 1 is that the replaceable accessory 200 includes a chip assembly 210 composed of a patch chip 212 and an old chip 211. Among them, the host device 100 is communicatively connected with the patch chip 212 via a second information transmission channel 302, and the patch chip 212 is communicatively connected with the old chip 211 via a third information transmission channel 303. That is to say, the patch chip 212 is communicatively connected with the host device 100 directly, while old chip 211 is communicatively connected with the host device 100 indirectly through the patch chip 212.

When the host device 100 sends a first instruction (which requires the patch chip 212 to respond), the patch chip 212 directly processes the first instruction and sends first response data to the host device 100 without the involvement of the old chip 211. When the host device 100 sends a second instruction (which requires the old chip 211 to respond), the patch chip 212 forwards the second instruction to the old chip 211, the old chip 211 processes the second instruction and sends second response data to the patch chip 212, and the patch chip 212 then sends the second response data to the host device 100.

However, as a host of the old chip 211, the patch chip 212 needs to perform protocol conversion on the second response data received from the old chip 211, and then act as a slave of the host device 100 to send the processed second response data to the host device 100. The protocol conversion process takes a considerable amount of time, so that the overall response of the chip assembly 210 is relatively slow. For some host devices 100 that require high chip response speed, existing chip assemblies 210 are difficult to meet the response speed requirements of the host devices 100.

In addition, the process of protocol conversion and forwarding of the second response data by the patch chip 212 introduces additional power consumption. Compared to the replaceable accessory 200 which only includes the old chip 211, the power consumption of the replaceable accessory 200 with the added patch chip 212 is higher, which fails to meet the power consumption requirements of some host devices 100 for the replaceable accessory 200.

Referring to FIG. 3, which is a structural block diagram of a communication system provided in an embodiment of the present application. As shown in FIG. 3, the difference between this communication system and the communication system shown in FIG. 2 is that there is further a fourth information transmission channel 304 between the host device 100 and the old chip 211, where the host device 100 and the old chip 211 may directly send and receive data via the fourth information transmission channel 304. Specifically, the host device 100 may send a task instruction to the patch chip 212 via the second information transmission channel 302, and send a task instruction to the old chip 211 via the fourth information transmission channel 304. That is to say, both the patch chip 212 and the old chip 211 may directly receive the task instruction sent by the host device 100. Furthermore, if the task instruction is a first instruction, the patch chip 212 processes the first instruction and sends first response data to the host device 100 via the second information transmission channel 302; and if the task instruction is a second instruction, the old chip 211 processes the second instruction and sends second response data to the host device 100 via the fourth information transmission channel 304. Since the second response data does not require forwarding by the patch chip 212, it can improve the response speed of chip assembly 210.

In addition, in the embodiments of the present application, since the patch chip 212 may directly respond to the first instruction, the old chip 211 may directly respond to the second instruction (without requiring the patch chip 212 to perform protocol conversion and forwarding of the second response data). Therefore, the power consumption of the chip assembly 210 in responding to the first instruction and the second instruction is not significantly different from that of a single old chip in the prior art. Therefore, when applied to the host device 100, the chip assembly 210 can meet the power consumption requirements of the host device 100.

As mentioned above, the program and the data in the old chip 211 are usually fixed and cannot be modified by the third party. Therefore, in accordance with the program setting of the old chip 211, it usually responds to the task instruction upon receipt. However, when the task instruction is the first instruction, if the old chip 211 responds to the first instruction, it may interfere with the first response data of the patch chip 212, causing the host device 100 to be unable to receive the correct first response data. Therefore, the patch chip 212 should also control the response capability of the old chip 211. Specifically, the old chip 211 needs to operate based on a first control signal output by the patch chip 212 via the third information transmission channel 303. When the patch chip 212 receives the first instruction sent by the host device 100, it stops sending the first control signal to the old chip 211, leading the old chip 211 to be in an abnormal working state. In this abnormal working state, the old chip 211 is unable to respond to the task instruction sent by the host device 100, thereby avoiding interference from the old chip 211 on the first response data of the patch chip 212. When the patch chip 212 receives the second instruction sent by the host device 100, it sends the first control signal to the old chip 211, leading the old chip 211 is in a normal working state, and the old chip 211 may respond to the second instruction.

It should be pointed out that the first information transmission channel 301, the second information transmission channel 302, the third information transmission channel 303, and the fourth information transmission channel 304 in FIG. 1-FIG. 3 are only used to represent information interaction relationships between different functional units rather than physical connection relationships between the different functional units. The physical connection relationships between the different functional units will be explained in detail hereinafter.

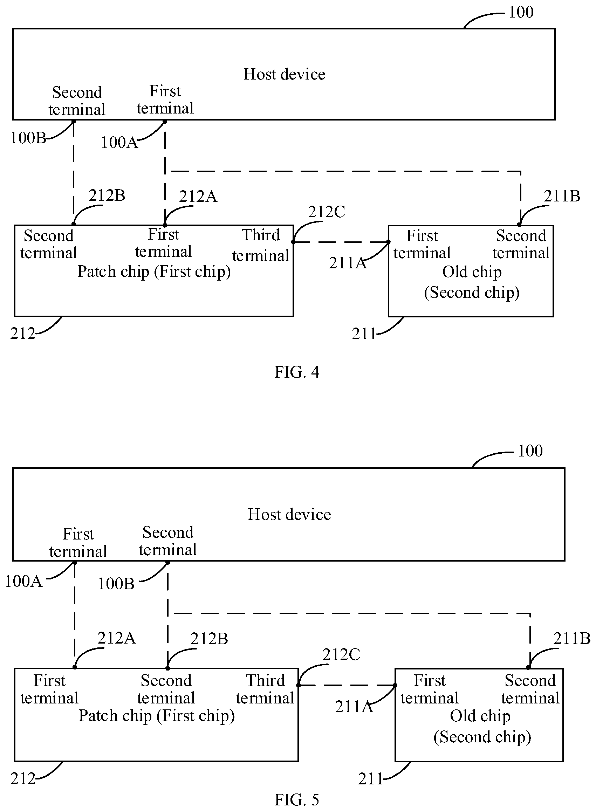

Referring to FIG. 4, which is a schematic diagram of a physical connection relationship of a communication system provided in an embodiment of the present application. As shown in FIG. 4, the host device 100 includes a first terminal 100A and a second terminal 100B; the patch chip 212 includes a first terminal 212A, a second terminal 212B, and a third terminal 212C; and the old chip 211 includes a first terminal 211A and a second terminal 211B. Among them, the first terminal 100A of the host device 100 is electrically connected with the first terminal 212A of the patch chip 212, and a first line is formed between the first terminal 100A of the host device 100 and the first terminal 212A of the patch chip 212. The second terminal 100B of the host device 100 is electrically connected with the second terminal 212B of the patch chip 212, and a second line is formed between the second terminal 100B of the host device 100 and the second terminal 212B of the patch chip 212. The third terminal 212C of the patch chip 212 is electrically connected with the first terminal 211A of the old chip 211, and the second terminal 211B of the old chip 211 is electrically connected with the first line.

In the embodiment of the present application, the host device 100 may send the task instruction through the first terminal 100A, where the task instruction includes the first instruction and the second instruction. Among them, the first instruction is an instruction which requires the patch chip 212 to respond. Specifically, a task corresponding to the first instruction may be a task which the patch chip 212 can accurately execute, and the old chip 211 does not have the execution capability. For example, the task corresponding to the first instruction is to provide accurate information of a remaining amount of consumables. Since the old chip 211 is unable to provide accurate information of the remaining amount of consumables, this task needs to be executed by the patch chip 212. The second instruction is an instruction which requires the old chip 211 to respond. Specifically, a task corresponding to the second instruction may be a task which the old chip 211 can accurately execute and the patch chip 212 does not have the execution ability. For example, the task corresponding to the second execution is to perform authentication between the old chip 211 and the host device 100, which requires sending identity information or encrypted information to the host device 100. The identity information or encrypted information is stored in the old chip 211, thus this task needs to be executed by the old chip 211.

It can be understood that according to the connection relationship shown in FIG. 4, both the patch chip 212 and the old chip 211 may receive the task instruction sent by the host device 100, and after the patch chip 212 and the old chip 211 receive the task instruction at the same time, the patch chip 212 determines and controls which chip executes the task instruction. Specifically, when the patch chip 212 determines that the task instruction is the first instruction, the third terminal 212C of the patch chip 212 stops sending the first control signal to the first terminal 211A of the old chip 211, leading the old chip 211 to be in an abnormal working state and unable to respond to the first instruction. At the same time, the patch chip 212 responds to the first instruction. Specifically, the patch chip 212 parses the first instruction, executes the task corresponding to the first instruction, and then sends the first response data to the host device 100 through the first terminal 212A and/or the second terminal 212B of the patch chip 212. When the patch chip 212 determines that the task instruction is the second instruction, the third terminal 212C of the patch chip 212 sends the first control signal to the first terminal 211A of the old chip 211, leading the old chip 211 to be in a normal working state, and the old chip 211 responds to the second instruction. Specifically, the old chip 211 parses the second instruction, executes the task corresponding to the second instruction, and then sends the second response data to the host device 100 through the second terminal 211B of the old chip 211. It can be understood that in the embodiment of the present application, the patch chip 212 controls the response capability of the old chip 211 to the task instruction by controlling whether the old chip 211 receives the first control signal.

It should be noted that when the patch chip 212 and the old chip 211 do not execute the task instruction sent by the host device 100, the third terminal 212C of the patch chip 212 may maintain the state of sending the first control signal to the first terminal 211A of the old chip 211, so that when the host device 100 sends the task instruction, the old chip 211 may receive the task instruction sent by the host device 100.

In a possible implementation, the first terminal 100A of the host device 100 is further configured to output a first voltage, and the second terminal 100B of the host device 100 is further configured to output a second voltage. Correspondingly, the first terminal 212A and the second terminal 212B of the patch chip 212 may further receive the first voltage and the second voltage output from the first terminal 100A and the second terminal 100B of the host device 100, respectively. The patch chip 212 may be powered on through the first voltage and the second voltage, enabling the patch chip 212 to power on and operate normally. In a specific implementation, the first voltage is a power supply voltage, and the second voltage is a ground voltage; or the first voltage is the ground voltage and the second voltage is the power supply voltage.

Since the second terminal 211B of the old chip 211 is electrically connected with the first line, the second terminal 211B of the old chip 211 may receive the first voltage output from the first terminal 100A of the host device 100. To enable the old chip 211 to power on and operate normally, the first terminal 211A of the old chip 211 also needs to receive the second voltage. Therefore, the response capability of the old chips 211211 can be controlled by controlling the output voltage of the third terminal 212C of the patch chip 212. Specifically, when the third terminal 212C of the patch chip 212 outputs the second voltage, the old chip 211 simultaneously receives the first voltage and the second voltage, thus the old chip 211 may be powered on and operate normally (in a normal working state), and may respond to the task instruction sent by the host device 100. When the third terminal 212C of the patch chip 212 does not output the second voltage, the old chip 211 cannot receive the first voltage and the second voltage at the same time, thus the old chip 211 cannot be powered on and operate normally (in an abnormal working state), and is unable to respond to the task instruction sent by the host device 100. It can be understood that in this application scenario, the first control signal mentioned above is the second voltage.

It can be understood that in the embodiments of the present application, ports between different functional units (the host device 100, the patch chip 212, and the old chip 211) may transmit both data and voltage, that is, a power line and a data line between different functional units are shared. Of course, technicians in this field may also set up an independent power line between different functional units according to actual needs, that is, the ports shown in FIG. 4 are only configured for data transmission. The embodiments of the present application do not make specific limitations on this.

Refer to FIG. 5, which is a schematic diagram of a physical connection relationship of another communication system provided in an embodiment of the present application. As shown in FIG. 5, the difference between the embodiment of the present application and the embodiment shown in FIG. 4 is that the second terminal 211B of the old chip 211 is electrically connected with the second line. Specifically, the host device 100 includes a first terminal 100A and a second terminal 100B; the patch chip 212 includes a first terminal 212A, a second terminal 212B, and a third terminal 212C; and the old chip 211 includes a first terminal 211A and a second terminal 211B. Among them, the first terminal 100A of the host device 100 is electrically connected with the first terminal 212A of the patch chip 212, and a first line is formed between the first terminal 100A of the host device 100 and the first terminal 212A of the patch chip 212. The second terminal 100B of the host device 100 is electrically connected with the second terminal 212B of the patch chip 212, and a second line is formed between the second terminal 100B of the host device 100 and the second terminal 212B of the patch chip 212. The third terminal 212C of the patch chip 212 is electrically connected with the first terminal 211A of the old chip 211, and the second terminal 211B of the old chip 211 is electrically connected with the second line.

In the embodiment of the present application, the host device 100 may send the task instruction through the second terminal 100B, where the task instruction includes the first instruction and the second instruction. It can be understood that according to the connection relationship shown in FIG. 5, both the patch chip 212 and the old chip 211 may receive the task instruction sent by the host device 100, and after the patch chip 212 and the old chip 211 receive the task instruction at the same time, the patch chip 212 determines and controls which chip executes the task instruction. Specifically, when the patch chip 212 determines that the task instruction is the first instruction, the third terminal 212C of the patch chip 212 stops sending the first control signal to the first terminal 211A of the old chip 211, leading the old chip 211 to be in an abnormal working state and unable to respond to the first instruction. At the same time, the patch chip 212 responds to the first instruction. Specifically, the patch chip 212 parses the first instruction, executes the task corresponding to the first instruction, and then sends the first response data to the host device 100 through the first terminal 212A and/or the second terminal 212B of the patch chip 212. When the patch chip 212 determines that the task instruction is the second instruction, the third terminal 212C of the patch chip 212 sends the first control signal to the first terminal 211A of the old chip 211, leading the old chip 211 to be in a normal working state, and the old chip 211 responds to the second instruction. Specifically, the old chip 211 parses the second instruction, executes the task corresponding to the second instruction, and then sends the second response data to the host device 100 through the second terminal 211B of the old chip 211. It can be understood that in the embodiment of the present application, the patch chip 212 controls the response capability of the old chip 211 to the task instruction by controlling whether the old chip 211 receives the first control signal.

It should be noted that when the patch chip 212 and the old chip 211 do not execute the task instruction sent by the host device 100, the third terminal 212C of the patch chip 212 may maintain the state of sending the first control signal to the first terminal 211A of the old chip 211, so that when the host device 100 sends the task instruction, the old chip 211 may receive the task instruction sent by the host device 100.

In a possible implementation, the first terminal 100A of the host device 100 is further configured to output a first voltage, and the second terminal 100B of the host device 100 is further configured to output a second voltage. Correspondingly, the first terminal 212A and the second terminal 212B of the patch chip 212 may receive the first voltage and the second voltage output from the first terminal 100A and the second terminal 100B of the host device 100, respectively. The patch chip 212 may be powered on through the first voltage and the second voltage, enabling the patch chip 212 to power on and operate normally. In a specific implementation, the first voltage is a power supply voltage, and the second voltage is a ground voltage; or the first voltage is the ground voltage and the second voltage is the power supply voltage.

Since the second terminal 211B of the old chip 211 is electrically connected with the second line, the second terminal 211B of the old chip 211 may receive the second voltage output from the second terminal 100B of the host device 100. To enable the old chip 211 to power on and operate normally, the first terminal 211A of the old chip 211 needs to receive the first voltage. Therefore, the response capability of the old chips 211211 can be controlled by controlling the output voltage of the third terminal 212C of the patch chip 212. Specifically, when the third terminal 212C of the patch chip 212 outputs the first voltage, the old chip 211 simultaneously receives the first voltage and the second voltage, thus the old chip 211 may be powered on and operate normally (in a normal working state), and may respond to the task instruction sent by the host device 100. When the third terminal 212C of the patch chip 212 does not output the first voltage, the old chip 211 cannot receive the first voltage and the second voltage at the same time, thus the old chip 211 cannot be powered on and operate normally (in an abnormal working state), and is unable to respond to the task instruction sent by the host device 100. It can be understood that in this application scenario, the first control signal mentioned above is the first voltage.

It can be understood that in the embodiments of the present application, ports between different functional units (the host device 100, the patch chip 212, and the old chip 211) may transmit both data and voltage, that is, a power line and a data line between different functional units are shared. Of course, technicians in this field may also set up an independent power line between different functional units according to actual needs, that is, the ports shown in FIG. 5 are only configured for data transmission, and the embodiments of the present application do not make specific limitations on this.

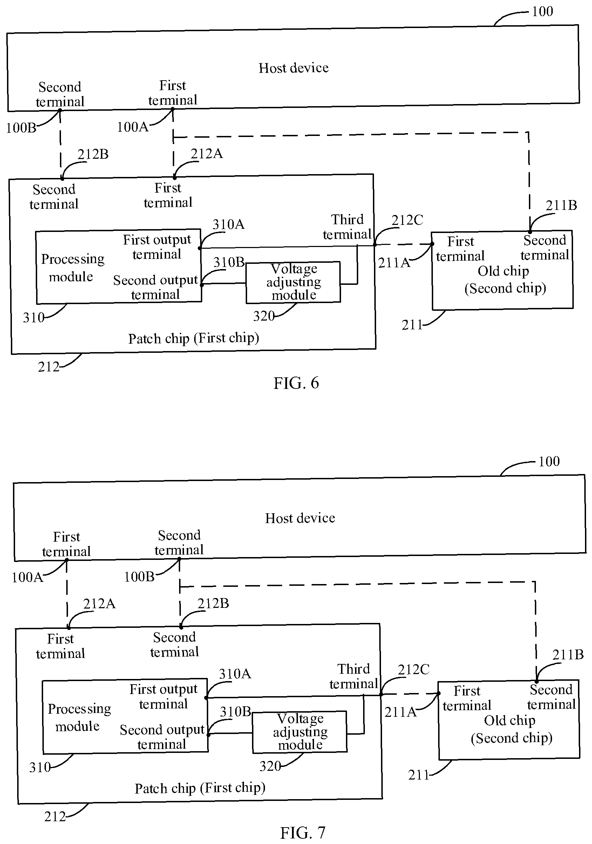

Referring to FIG. 6, which is a schematic diagram of a physical connection relationship of another communication system provided in an embodiment of the present application. As shown in FIG. 6, the difference between the embodiment of the present application and the embodiment shown in FIG. 4 is that the patch chip 212 further includes a voltage adjusting module 320 and a processing module 310. Among them, a first output terminal 310A of the processing module 310 is electrically connected with the third terminal 212C of the patch chip 212, and a second output terminal 310B of the processing module 310 is electrically connected with the third terminal 212C of the patch chip 212 through the voltage adjusting module 320. When receiving the first instruction sent by the host device 100, a signal output by the second output terminal 310B of the processing module 310 is processed by the voltage adjusting module 320 to output a second control signal, that is, the second control signal is sent to the third terminal 212C of the patch chip 212, and the first terminal 211A of the old chip 211 receives the second control signal. At this time, the old chip 211 is in the abnormal working state, so that the old chip 211 is unable to respond to the first instruction. When receiving the second instruction sent by the host device 100, the first control signal is sent by the first output terminal 310A of the processing module 310 to the third terminal 212C of the patch chip 212, and the first terminal 211A of the old chip 211 receives the first control signal. At this time, the old chip 211 is in the normal working state and may respond to the first instruction.

In a possible implementation, when the first terminal 211A of the old chip 211 receives the second control signal, the old chip 211 is in a low voltage state (a type of the abnormal working state). In the low voltage state, although the old chip 211 cannot respond to the task instruction, the old chip 211 still remains powered on, and at least part of data stored in the old chip 211 will not be lost. In this way, when the old chip 211 receives the first control signal again, the at least part of data is still stored in the old chip 211, and the old chip 211 can perform a task that requires the at least part of data. In some possible implementations, the at least part of data may be a temporary variable, such as a session key.

In a possible implementation, the first terminal 100A of the host device 100 is further configured to output a first voltage, and the second terminal 100B of the host device 100 is further configured to output a second voltage. Correspondingly, the first terminal 212A and the second terminal 212B of the patch chip 212 may further receive the first voltage and the second voltage output from the first terminal 100A and the second terminal 100B of the host device 100, respectively. The patch chip 212 may be powered on through the first voltage and the second voltage, enabling the patch chip 212 to power on and operate normally. In a specific implementation, the first voltage is a power supply voltage, and the second voltage is a ground voltage; or the first voltage is the ground voltage and the second voltage is the power supply voltage.

In addition, since the second terminal 211B of the old chip 211 is electrically connected with the first line, the second terminal 211B of the old chip 211 may receive the first voltage output from the first terminal 100A of the host device 100. To enable the old chip 211 to power on and operate normally, the first terminal 211A of the old chip 211 needs to receive the second voltage. Therefore, the response capability of the old chips 211211 can be controlled by controlling the output voltage of the third terminal 212C of the patch chip 212. Specifically, when receiving the first instruction sent by the host device 100, a signal output by the second output terminal 310B of the processing module 310 is processed by the voltage adjusting module 320 to output a third voltage, that is, the first terminal 211A of the old chip 211 receives the third voltage. Among them, a voltage difference between the first voltage and the third voltage is smaller than a voltage difference between the first voltage and the second voltage, then a voltage difference loaded between the first terminal 211A and the second terminal 211B of the old chip 211 is smaller than a voltage difference required for powering on and operating normally, leading the old chip 211 to be in the low voltage state and unable to respond to the first instruction. However, at this time, the old chip 211 is still powered on, and at least part of data stored in the old chip 211 will not be lost. When receiving the second instruction sent by the host device 100, the second voltage is output by the first output terminal 310A of the processing module 310, that is, the first terminal 211A of the old chip 211 receives the second voltage. At this time, a voltage difference loaded between the first terminal 211A and the second terminal 211B of the old chip 211 is a voltage difference required for operating normally. Therefore, the old chip 211 is in the normal working state and can respond to the second instruction. It can be understood that in the present application scenario, the first control signal mentioned above is the second voltage, and the second control signal mentioned above is the third voltage.

Referring to FIG. 7, which is a schematic diagram of a physical connection relationship of another communication system provided in an embodiment of the present application. As shown in FIG. 7, the difference between the embodiment of the present application and the embodiment shown in FIG. 5 is that the patch chip 212 further includes a voltage adjusting module 320 and a processing module 310. Among them, a first output terminal 310A of the processing module 310 is electrically connected with the third terminal 212C of the patch chip 212, and a second output terminal 310B of the processing module 310 is electrically connected with the third terminal 212C of the patch chip 212 through the voltage adjusting module 320. When receiving the first instruction sent by the host device 100, a signal output by the second output terminal 310B of the processing module 310 is processed by the voltage adjusting module 320 to output a second control signal, that is, the second control signal is sent to the third terminal 212C of the patch chip 212, and the first terminal 211A of the old chip 211 receives the second control signal. At this time, the old chip 211 is in the abnormal working state, so that the old chip 211 is unable to respond to the first instruction. When receiving the second instruction sent by the host device 100, the first control signal is sent by the first output terminal 310A of the processing module 310 to the third terminal 212C of the patch chip 212, and the first terminal 211A of the old chip 211 receives the first control signal. At this time, the old chip 211 is in the normal working state and may respond to the first instruction.

In a possible implementation, when the first terminal 211A of the old chip 211 receives the second control signal, the old chip 211 is in a low voltage state (a type of the abnormal working state). In the low voltage state, although the old chip 211 cannot respond to the task instruction, the old chip 211 still remains powered on, and at least part of data stored in the old chip 211 will not be lost. In this way, when the old chip 211 receives the first control signal again, the at least part of data is still stored in the old chip 211, and the old chip 211 can perform a task that requires the at least part of data. In some possible implementations, the at least part of data may be a temporary variable, such as a communication key.

In a possible implementation, the first terminal 100A of the host device 100 is further configured to output a first voltage, and the second terminal 100B of the host device 100 is further configured to output a second voltage. Correspondingly, the first terminal 212A and the second terminal 212B of the patch chip 212 may further receive the first voltage and the second voltage output from the first terminal 100A and the second terminal 100B of the host device 100, respectively. The patch chip 212 may be powered on through the first voltage and the second voltage, enabling the patch chip 212 to power on and operate normally. In a specific implementation, the first voltage is a power supply voltage, and the second voltage is a ground voltage; or the first voltage is the ground voltage and the second voltage is the power supply voltage.

**In** addition, since the second terminal 211B of the old chip 211 is electrically connected with the second line, the second terminal 211B of the old chip 211 may receive the second voltage output from the first terminal 100A of the host device 100. To enable the old chip 211 to power on and operate normally, the first terminal 211A of the old chip 211 needs to receive the first voltage. Therefore, the response capability of the old chips 211211 can be controlled by controlling the output voltage of the third terminal 212C of the patch chip 212. Specifically, when receiving the first instruction sent by the host device 100, a signal output by the second output terminal 310B of the processing module 310 is processed by the voltage adjusting module 320 to output a fourth voltage, that is, the first terminal 211A of the old chip 211 receives the fourth voltage. Among them, a voltage difference between the fourth voltage and the second voltage is smaller than a voltage difference between the first voltage and the second voltage, then a voltage difference loaded between the first terminal 211A and the second terminal 211B of the old chip 211 is smaller than a voltage difference required for powering on and operating normally, leading the old chip 211 to be in the low voltage state and unable to respond to the first instruction. However, at this time, the old chip 211 is still powered on, and at least part of data stored in the old chip 211 will not be lost. When receiving the second instruction sent by the host device 100, the first voltage is output by the first output terminal 310A of the processing module 310, that is, the first terminal 211A of the old chip 211 receives the first voltage. At this time, a voltage difference loaded between the first terminal 211A and the second terminal 211B of the old chip 211 is a voltage difference required for operating normally. Therefore, the old chip 211 is in the normal working state and can respond to the second instruction. It can be understood that in this application scenario, the first control signal mentioned above is the first voltage, and the second control signal mentioned above is the fourth voltage.

**In** a possible implementation, the voltage adjusting module 320 includes a resistance component and/or a semiconductor component, which are not specifically limited by the embodiments of the present application.

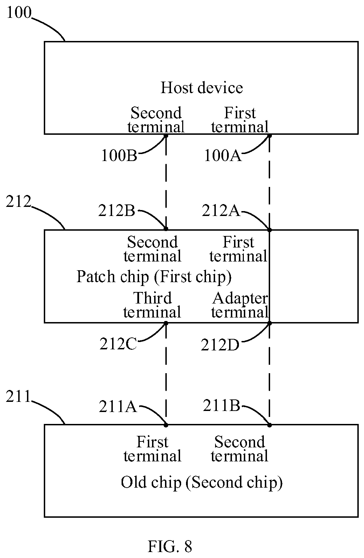

Referring to FIG. 8, which is a schematic diagram of a physical connection relationship of another communication system provided in an embodiment of the present application. As shown in FIG. 8, the difference between the embodiment of the present application and the embodiment shown in FIG. 4 is that the patch chip 212 further includes an adapter terminal 212D, and the first terminal 212A of the patch chip 212 is electrically connected with the adapter terminal 212D. It can be understood that when the first terminal 212A of the patch chip 212 is electrically connected with the adapter terminal 212D, the second terminal 211B of the old chip 211 may be electrically connected with the first line through the electrical connection with the adapter terminal 212D of the patch chip 212, which facilitates the assembly of the old chip 211 and the patch chip 212.

**In** a possible implementation, the first terminal 212A of the patch chip 212 being electrically connected with the adapter terminal 212D specifically includes: the first terminal 212A of the patch chip 212 is electrically connected with the adapter terminal 212D within the patch chip 212. That is to say, when designing the patch chip 212, the electrical connection between the first terminal 212A of the patch chip 212 and the adapter terminal 212D is achieved through an internal circuit of the patch chip 212. It can be understood that compared to "achieving electrical connection between the first terminal 212A of the patch chip 212 and the adapter terminal 212D through a connecting wire outside the patch chip 212", the embodiment of the present application can reduce the external connecting wire of the patch chip 212, making the circuit of the chip assembly composed of the patch chip 212 and the old chip 211 simpler.

**In** a possible implementation, the third terminal 212C and the transition stage 212D of the patch chip 212 are located on one side of the patch chip 212 (the lower side shown in FIG. 8), and the first terminal 212A and the second terminal 212B of the patch chip 212 are located on the other side of the patch chip 212 (the upper side shown in FIG. 8). According to this setting, the old chip 211 can be connected to one side of the patch chip 212, and the other side of the patch chip 212 is used to connect with the host device 100, making the structure of the chip assembly composed of the patch chip 212 and the old chip 211 more compact. Of course, the person skilled in the art may also set other port layout manners on the patch chip 212 according to actual needs, and the embodiments of the present application do not make specific limitations on this.

It should be pointed out that according to the connection relationship shown in FIG. 8, when the old chip 211 sends the second response data to the host device 100 through the second terminal 211B, the second response data passes through the internal of the patch chip 212, but it only uses the line between the first terminal 212A and the adapter terminal 212D of the patch chip 212 to achieve data transmission, and does not require the patch chip 212 to process and forward the second response data.

For other details about the embodiment of the present application, please refer to the description of the embodiment shown in FIG. 4, which will not be repeated for the sake of conciseness.

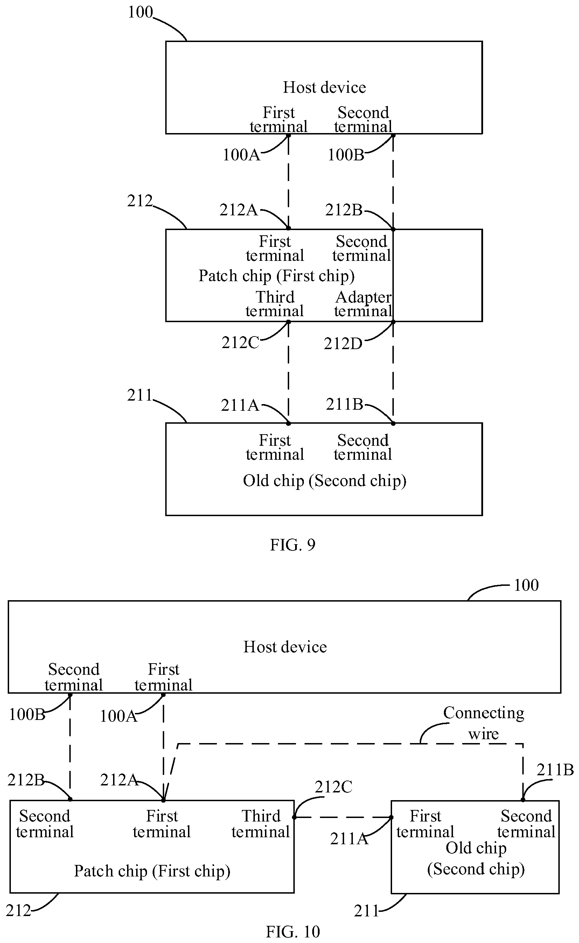

Referring to FIG. 9, which is a schematic diagram of a physical connection relationship of another communication system provided in an embodiment of the present application. As shown in FIG. 9, the difference between the embodiment of the present application and the embodiment shown in FIG. 5 is that the patch chip 212 further includes an adapter terminal 212D, and the second terminal 212B of the patch chip 212 is electrically connected with the adapter terminal 212D. It can be understood that when the second terminal 212B of the patch chip 212 is electrically connected with the adapter terminal 212D, the second terminal 211B of the old chip 211 may be electrically connected with the second line through the electrical connection with the adapter terminal 212D of the patch chip 212, which facilitates the assembly of the old chip 211 and the patch chip 212.

**In** a possible implementation, the second terminal 212B of the patch chip 212 being electrically connected with the adapter terminal 212D specifically includes: the second terminal 212B of the patch chip 212 is electrically connected with the adapter terminal 212D within the patch chip 212. That is to say, when designing the patch chip 212, the electrical connection between the second terminal 212B of the patch chip 212 and the adapter terminal 212D is achieved through an internal circuit of the patch chip 212. It can be understood that compared to "achieving electrical connection between the second terminal 212B of the patch chip 212 and the adapter terminal 212D through a connecting wire outside the patch chip 212", the embodiment of the present application can reduce the external connecting wire of the patch chip 212, making the circuit of the chip assembly composed of the patch chip 212 and the old chip 211 simpler.

In a possible implementation, the third terminal 212C and the transition stage 212D of the patch chip 212 are located on one side of the patch chip 212 (the lower side shown in FIG. 8), and the first terminal 212A and the second terminal 212B of the patch chip 212 are located on the other side of the patch chip 212 (the upper side shown in FIG. 8). According to this setting, the old chip 211 can be connected to one side of the patch chip 212, and the other side of the patch chip 212 is used to connect with the host device 100, making the structure of the chip assembly composed of the patch chip 212 and the old chip 211 more compact. Of course, the person skilled in the art may also set other port layout manners on the patch chip 212 according to actual needs, and the embodiments of the present application do not make specific limitations on this.

It should be pointed out that according to the connection relationship shown in FIG. 9, when the old chip 211 sends the second response data to the host device 100 through the second terminal 211B, the second response data passes through the internal of the patch chip 212, but it only uses the line between the second terminal 212B and the adapter terminal 212D of the patch chip 212 to achieve data transmission, and does not require the patch chip 212 to process and forward the second response data.

For other details about the embodiment of the present application, please refer to the description of the embodiment shown in FIG. 5, which will not be repeated for the sake of conciseness.

Referring to FIG. 10, which is a schematic diagram of a physical connection relationship of another communication system provided in an embodiment of the present application. As shown in FIG. 10, in the embodiment of the present application, the second terminal 211B of the old chip 211 is electrically connected with the first terminal 212A of the patch chip 212 through a connecting wire, achieving electrical connection between the second terminal 211B of the old chip 211 and the first line. Compared to setting up an adapter terminal 212D on the patch chip 212, this solution is easier to implement.

For other details about the embodiment of the present application, please refer to the description of the embodiment shown in FIG. 4, which will not be repeated for the sake of conciseness.

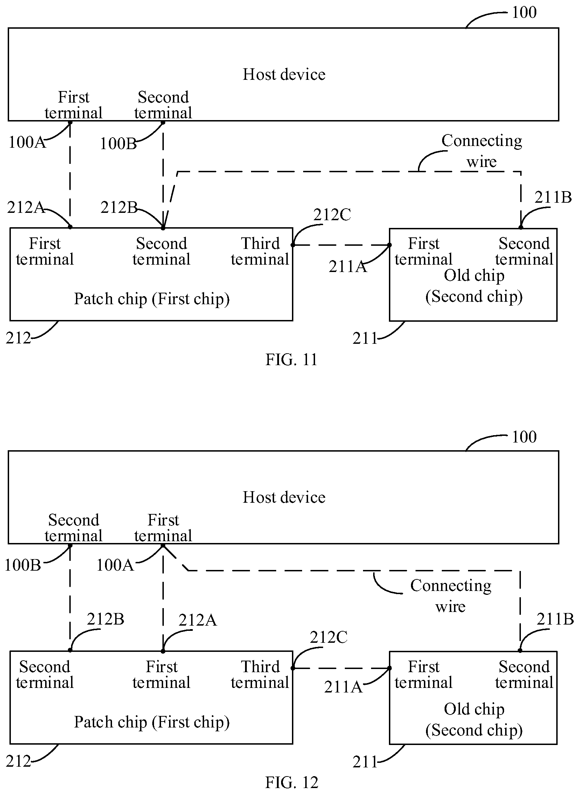

Referring to FIG. 11, which is a schematic diagram of a physical connection relationship of another communication system provided in an embodiment of the present application. As shown in FIG. 11, in the embodiment of the present application, the second terminal 211B of the old chip 211 is electrically connected with the second terminal 212B of the patch chip 212 through a connecting wire, achieving electrical connection between the second terminal 211B of the old chip 211 and the second line. Compared to setting up an adapter terminal 212D on the patch chip 212, this solution is easier to implement.

For other details about the embodiment of the present application, please refer to the description of the embodiment shown in FIG. 5, which will not be repeated for the sake of conciseness.

Referring to FIG. 12, it is a schematic diagram of the physical connection relationship of another communication system provided in the embodiments of the present application. As shown in Figure 12, in the embodiment of the present application, the second terminal 211B of the old chip 211 is electrically connected to the first terminal 100A of the host device 100 through a connecting wire, achieving electrical connection between the second terminal 211B of the old chip 211 and the first line. In the present embodiment of the application, the second terminal 211B of the old chip 211 is directly electrically connected with the host device 100 without going through the patch chip 212, which can improve the stability of the electrical connection.

For other details about the embodiment of the present application, please refer to the description of the embodiment shown in FIG. 4, which will not be repeated for the sake of conciseness.

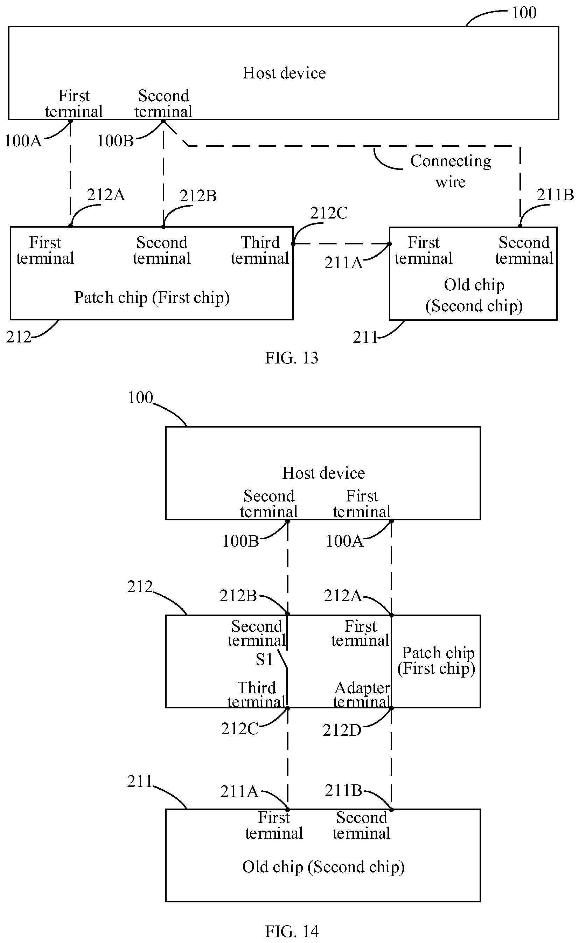

Referring to FIG. 13, which is a schematic diagram of a physical connection relationship of another communication system provided in an embodiment of the present application. As shown in FIG. 13, in the embodiment of the present application, the second terminal 211B of the old chip 211 is electrically connected with the second terminal 100B of the host device 100 through a connecting wire, achieving electrical connection between the second terminal 211B of the old chip 211 and the second line. In the present embodiment of the application, the second terminal 211B of the old chip 211 is directly electrically connected with the host device 100 without going through the patch chip 212, which can improve the stability of the electrical connection.

For other details about the embodiment of the present application, please refer to the description of the embodiment shown in FIG. 5, which will not be repeated for the sake of conciseness.

Referring to FIG. 14, which is a schematic diagram of a physical connection relationship of another communication system provided in an embodiment of the present application. As shown in FIG. 14, the difference between the embodiment of the present application and the embodiment shown in FIG. 8 is that a first switch S1 is further provided within the patch chip 212, and the second terminal 212B of the patch chip 212 is electrically connected with the third terminal 212C of the patch chip 212 through the first switch S1. It can be understood that through the first switch S1, the second terminal 212B and the third terminal 212C of the patch chip 212 can be controlled to switch between being electrically connected and being electrically insulated. Specifically, when the first switch S1 is closed, the second terminal 212B and the third terminal 212C of the patch chip 212 are electrically connected; when the first switch S1 is open, the second terminal 212B and the third terminal 212C of the patch chip 212 are electrically insulated.

When the patch chip 212 receives the first instruction sent by the host device 100, it controls the first switch S1 to open, and the second terminal 212B and the third terminal 212C of the patch chip 212 are electrically insulated, so that the third terminal 212C of the patch chip 212 stops sending the first control signal to the first terminal 211A of the old chip 211, setting the old chip 211 to be in the abnormal working state, and the old chip 211 is unable to respond to the first instruction. When the patch chip 212 receives the second instruction sent by the host device 100, it controls the first switch S1 to close, and the second terminal 212B and the third terminal 212C of the patch chip 212 are electrically connected, so that the third terminal 212C of the patch chip 212 sends the first control signal to the first terminal 211A of the old chip 211, setting the old chip 211 to be in the normal working state, and the old chip 211 can respond to the second instruction. It can be understood that when the first terminal 212A of the patch chip 212 receives the first voltage and the second terminal 212B of the patch chip 212 receives the second voltage, the first control signal is the second voltage.

It should be pointed out that, in addition to a simple switch, the person skilled in the art can also use, according to actual needs, another device to achieve switching between being electrically connected and being electrically insulated between the second terminal 212B and the third terminal 212C of the patch chip 212. The embodiments of the present application do not make specific limitations on this.

For other details about the embodiment of the present application, please refer to the description of the embodiment shown in FIG. 8, which will not be repeated for the sake of conciseness.

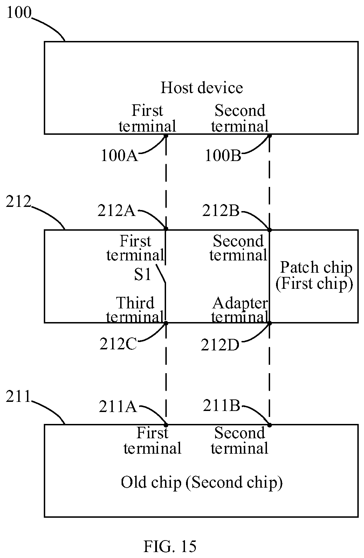

Referring to FIG. 15, which is a schematic diagram of the physical connection relationship of another communication system provided in the embodiments of the present application. As shown in FIG. 15, the difference between the embodiment of the present application and the embodiment shown in FIG. 9 is that a second switch S2 is further provided within the patch chip 212, and the first terminal 212B of the patch chip 212 is electrically connected with the third terminal 212C of the patch chip 212 through the second switch S2. It can be understood that through the second switch S2, the first terminal 212A and the third terminal 212C of the patch chip 212 can be controlled to switch between being electrically connected and being electrically insulated. Specifically, when the second switch S2 is closed, the first terminal 212A and the third terminal 212C of the patch chip 212 are electrically connected; when the second switch S2 is open, the first terminal 212A and the third terminal 212C of the patch chip 212 are electrically insulated.

When the patch chip 212 receives the first instruction sent by the host device 100, it controls the second switch S2 to open, and the first terminal 212A and the third terminal 212C of the patch chip 212 are electrically insulated, so that the third terminal 212C of the patch chip 212 stops sending the first control signal to the first terminal 211A of the old chip 211, setting the old chip 211 to be in the abnormal working state and the old chip 211 is unable to respond to the first instruction. When the patch chip 212 receives the second instruction sent by the host device 100, it controls the second switch S2 to close, and the first terminal 212A and the third terminal 212C of the patch chip 212 are electrically connected, so that the third terminal 212C of the patch chip 212 sends the first control signal to the first terminal 211A of the old chip 211, setting the old chip 211 to be in the normal working state, and the old chip 211 can respond to the second instruction. It can be understood that in the embodiment of the present application, when the first terminal 212A of the patch chip 212 receives the first voltage and the second terminal 212B of the patch chip 212 receives the second voltage, the first control signal is the first voltage.

It should be pointed out that, in addition to a simple switch, the person skilled in the art can also use, according to actual needs, another device to achieve switching between being electrically connected and being electrically insulated between the first terminal 212A and the third terminal 212C of the patch chip 212. The embodiments of the present application do not make specific limitations on this.

For other details about the embodiment of the present application, please refer to the description of the embodiment shown in FIG. 9, which will not be repeated for the sake of conciseness.

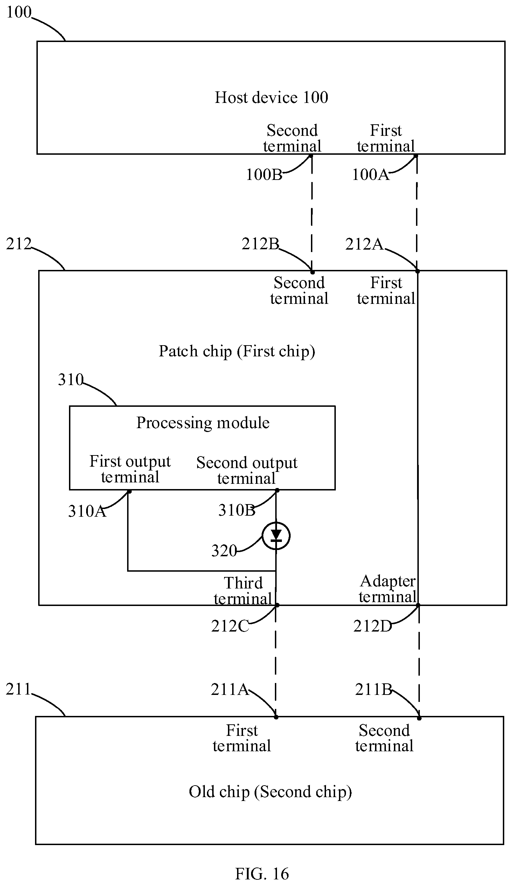

Referring to FIG. 16, which is a schematic diagram of the physical connection relationship of another communication system provided in the embodiments of the present application. As shown in FIG. 16, the difference between the embodiment of the present application and the embodiment shown in FIG. 4 is that the patch chip 212 further includes a voltage adjusting module 320, a processing module 310, and an adapter terminal 212D. For the specific content of "the voltage adjusting module 320 and the processing module 310", please refer to the description of the embodiment shown in FIG. 6, and for the specific content of "the adapter terminal 212D", please refer to the description of the embodiment shown in FIG. 8, which will not be repeated for the sake of conciseness.

In addition, in the embodiment of the present application, the voltage adjusting module 320 is a diode. When current flows through the diode, a voltage difference is generated at both terminals of the diode, thereby achieving voltage adjusting for the output signal of the second output terminal 310B of the processing module 310. Additionally, when the diode is forward-biased, the voltage difference between its two terminals can remain substantially stable, ensuring that the voltage received by the old chip 211 remains stable.

It should be pointed out that FIG. 16 is only an exemplary illustration of the voltage adjusting module 320 in the embodiment of the present application, and should not be construed as a limitation of the protection scope of the present application. For example, the number of diodes may also be multiple, and the multiple diodes may be connected in series or parallel. The person skilled in the art may adjust the type, quantity, and connection relationship of the diodes according to actual needs, without specific limitations imposed by these embodiments. In addition, besides a diode, the person skilled in the art may also use another device to achieve the voltage adjusting function, such as, a resistance component, a semiconductor component other than the diodes, or a combinations of a resistance component and a semiconductor component. The embodiments of the present application do not make specific limitations on this.

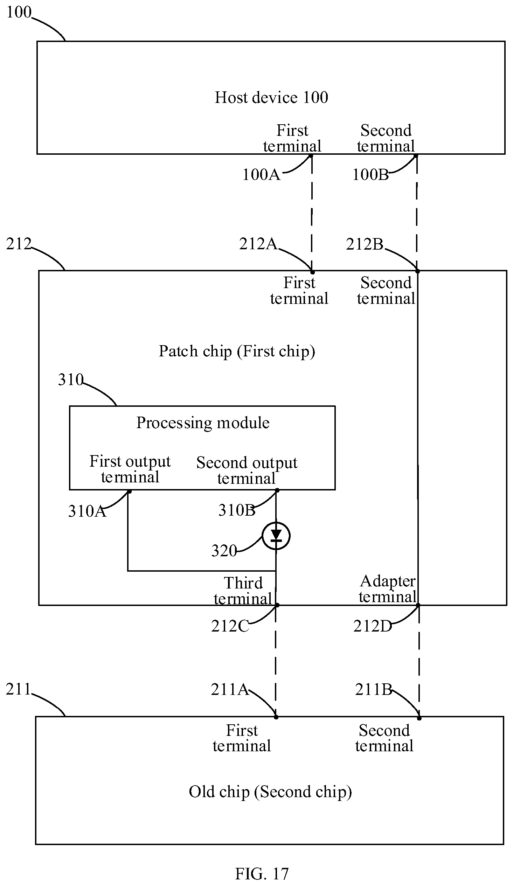

Referring to FIG. 17, which is a schematic diagram of the physical connection relationship of another communication system provided in the embodiments of the present application. As shown in FIG. 17, the difference between the embodiment of the present application and the embodiment shown in FIG. 5 is that the patch chip 212 further includes a voltage adjusting module 320, a processing module 310, and an adapter terminal 212D. For the specific content of "the voltage adjusting module 320 and the processing module 310", please refer to the description of the embodiment shown in FIG. 7, and for the specific content of "the adapter terminal 212D", please refer to the description of the embodiment shown in FIG. 9, which will not be repeated for the sake of conciseness.

In addition, in the embodiment of the present application, the voltage adjusting module 320 is a diode. When current flows through the diode, a voltage difference is generated at both terminals of the diode, thereby achieving voltage adjusting for the output signal of the second output terminal 310B of the processing module 310. Of course, besides a diode, the person skilled in the art may also use another device to achieve the voltage adjusting function, such as, a resistance component, a semiconductor component other than the diodes, or a combinations of a resistance component and a semiconductor component. The embodiments of the present application do not make specific limitations on this.

Corresponding to the above embodiments, the present application further provides a communication method.

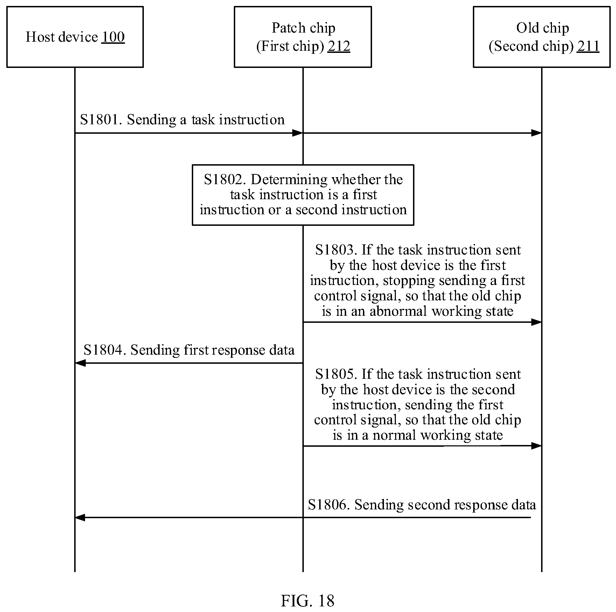

Referring to FIG. 18, which is a schematic flowchart of a communication method provided in an embodiment of the present application. This method can be applied to the communication system shown in FIG. 3-FIG.17, as shown in FIG. 18, which mainly includes the following steps.

Step S1801: a host device 100 sends a task instruction to a patch chip 212 and an old chip 211.

It can be understood that according to the connection relationships among the host device 100, the patch chip 212, and the old chip 211 in the communication system shown in FIG. 3-FIG.17, when the host device 100 sends the task instruction, both the patch chip 212 and the old chip 211 can receive the task instruction.

Step S1802: the patch chip 212 determines whether the task instruction is a first instruction or a second instruction.

As mentioned above, after the repair of a replaceable accessory 200, part of data in the old chip 211 does not match the repaired replaceable accessory 200 (such as remaining service life data, etc.); and another part of the data still matches the repaired replaceable accessory 200 (such as, identity data, encrypted data, and etc.). For ease of explanation, the data in the old chip 211 that does not match the repaired replaceable accessory 200 is referred to as "invalid data"; and the data that still matches the repaired replaceable accessory 200 in the old chip 211 is referred to as "valid data".

In general, after the replaceable accessory 200 is repaired, the invalid data in the old chip 211 will be reset, and the generated reset data will be stored in the patch chip 212. In the subsequent work process, the patch chip 212 will respond to an instruction associated with the invalid data. In addition, since the valid data in the old chip 211 can still be used, there is no need to reset the valid data in the old chip 211. In the subsequent work process, the old chip 211 still responds to an instruction associated with the valid data. It can be understood that the "instruction associated with the invalid data" refer to an instruction that requires the patch chip 212 to respond, and this type of instruction is referred to as the "first instruction"; the "instruction associated with the valid data" refer to an instruction that requires the old chip 211 to respond, and this type of instruction is referred to as the "second instruction".

As mentioned above, a program and data in the old chip 211 are usually fixed and cannot be modified by a third party. Therefore, in the embodiment of the present application, "resetting the invalid data in the old chip 211" does not directly modify the invalid data in the old chip 211, but generates reset data corresponding to the invalid data and stores the generated reset data in the patch chip 212, while the invalid data in the old chip 211 remains unchanged. It can be understood that the reset data in the patch chip 212 is in a valid state. For example, the remaining service life data in the old chip 211 is "0", and the remaining service life data in the old chip 211 is invalid. After resetting the remaining service life data to "100%", and the remaining service life data "100%" is stored in the patch chip 212. The remaining service life data "100%" in the patch chip 212 is the reset data, and it can be understood that the reset data is in the valid state.

After receiving the task instruction, the patch chip 212 first needs to determine whether the received task instruction is the first instruction or the second instruction. In a specific implementation, the patch chip 212 may determine whether the task instruction is the first instruction or the second instruction after receiving part of data from the task instruction sent by the host device 100; or after receiving all the data in the task instruction sent by the host device 100, determine whether the task instruction is the first instruction or the second instruction.

For example, the task instruction includes a field for marking an instruction type. It can be understood that when the field is located at a front position or a middle position of the task instruction, the patch chip 212 may determine whether the task instruction is the first instruction or the second instruction after receiving part of data (including data of the field for marking the instruction type) in the task instruction sent by the host device 100. When the field is located at an end of the task instruction, the patch chip 212 needs to receive all data in the task instruction sent by host device 100 before it can determine whether the task instruction is the first instruction or the second instruction.

It can be understood that the patch chip 212 determines whether the task instruction is the first instruction or the second instruction based on the part of data, which can improve the response speed of the patch chip 212.

Step S1803: if the task instruction sent by the host device 100 is the first instruction, stopping sending a first control signal to the old chip 211, so that the old chip 211 is in an abnormal working state.

It can be understood that when the task instruction sent by the host device 100 is the first instruction, the patch chip 212 needs to respond, that is, the patch chip 212 needs to send first response data to the host device 100. However, according to the program setting in the old chip 211, the old chip 211 will respond to the task instruction (whether it is the first instruction or the second instruction) upon receiving the task instruction. That is to say, after receiving the first instruction, the old chip 211 will also output corresponding response data. The response data output by the old chip 211 usually interferes with the first response data output by the patch chip 212, resulting in the host device 100 being unable to receive the correct first response data. Therefore, in the embodiment of the present application, when the patch chip 212 determines that the task instruction sent by the host device 100 is the first instruction, it stops sending the first control signal to the old chip 211. When the old chip 211 cannot receive the first control signal, it will enter the abnormal working state, making it unable to respond to the task instruction sent by the host device 100, thereby avoiding the old chip 211 from outputting interference data.

During normal working operation, the patch chip 212 usually maintains the state of sending the first control signal to the old chip 211, so that the old chip 211 has the ability to receive the task instruction sent by the host device 100. That is, the patch chip 212 is currently in the state of sending the first control signal to the old chip 211. Therefore, in the embodiment of the present application, "stopping sending the first control signal to the old chip 211" specifically means that the patch chip 212 switches from the state of "sending the first control signal to the old chip 211" to the state of "stopping sending the first control signal to the old chip 211". Of course, in another application scenario, the patch chip 212 may also currently be in a state of stopping sending the first control signal to the old chip 211. Correspondingly, "stopping sending the first control signal to the old chip 211" specifically means maintaining the state of stopping sending the first control signal to the old chip 211.

In general, the patch chip 212 will immediately stop sending the first control signal to the old chip 211 after determining that the task instruction sent by the host device 100 is the first instruction. As mentioned above, timings for determining task instructions of the patch chip 212 are different (determining whether the task instruction is the first instruction or the second instruction after receiving all or part of the data in the task instruction), resulting in different timings for stopping sending the first control signal to the old chip 211, which in turn leads to different data received by the old chip 211, which will be discussed hereinafter.

One scenario is that, after receiving part of data in the task instruction sent by host device 100, the patch chip 212 determines that the task instruction sent by host device 100 is the first instruction, and immediately stops sending the first control signal to old chip 211. It can be understood that at this point, the old chip 211 has not yet received all the data in the task instruction, that is, the old chip 211 has not received the complete first instruction, which makes it impossible for the old chip 211 to generate response data corresponding to the first instruction, thereby avoiding the old chip 211 from outputting interference data.

Another scenario is that, after receiving all data in the task instruction sent by the host device 100, the patch chip 212 determines that the task instruction sent by the host device 100 is the first instruction, and immediately stops sending the first control signal to the old chip 211. It can be understood that at this point, the old chip 211 has already received all the data in the task instruction, that is, the old chip 211 has received the complete first instruction. However, due to the patch chip 212 stopping sending the first control signal to the old chip 211, the old chip 211 is in the abnormal working state. Even if the old chip 211 receives the complete first instruction, it cannot perform corresponding data processing, thereby avoiding the old chip 211 from outputting interference data.

It can be understood that after receiving part of data in the task instruction sent by the host device 100, the patch chip 212 stops sending the first control signal to the old chip 211, which can enable the old chip 211 to process less data and thus reduce the power consumption of the entire chip assembly 210.

In some possible implementation methods, the abnormal working state is a low voltage state, and a working voltage value of the low voltage state is lower than that of the normal working state. In the low voltage state, although the old chip 211 is unable to respond to the task instruction, the old chip 211 still remains powered on, so at least part of data stored in the old chip 211 will not be lost. In this way, when the old chip 211 receives the first control signal again, the at least part of data is still stored in the old chip 211, and the old chip 211 can perform a task that requires the at least part of data. In some possible implementations, the at least part of data may be a temporary variable, such as a session key. The explanation will be given with specific application scenarios.

In an application scenario, when an encrypted communication is required between the host device 100 and the chip assembly 210, the old chip 211 generates a session key and performs the encrypted communication with the host device 100 based on the session key. The session key is usually a temporary variable stored in the old chip 211. When the host device 100 sends the first instruction, if the old chip 211 is directly controlled to be powered off, it will result in the loss of the session key. When the host device 100 sends the second instruction again, it needs to regenerate the session key and increase the data processing capacity of the old chip 211.

In addition, the session key is typically generated based on an encryption seed and a counter value stored in the old chip 211. According to the program setting of the old chip 211, after being powered on again, the counter value will increase by 1 by default, which will cause the session key to change after being powered on again. That is to say, when the host device 100 sends the first instruction, if the old chip 211 is directly controlled to be powered off, switching to the second instruction and controlling the old chip 211 to be powered on again will cause a change in the session key in the old chip 211. It can be understood that after the session key in the old chip 211 is changed, the old chip 211 cannot decrypt and recognize the second instruction sent by the host device 100, which can lead to communication abnormalities.

On the contrary, in the embodiment of the present application, when the host device 100 sends the first instruction, the old chip 211 is controlled to be entered the low voltage state (maintain power on), which can avoid the loss of the session key stored in the old chip 211. When the host device 100 sends the second instruction again, the old chip 211 may directly use the temporarily stored session key to perform encrypted communication with the host device 100. It can be understood that, this scheme is particularly suitable for the application scenario where the first instruction and the second instruction frequently switch and require encrypted communication.

The specific implementation method of "the abnormal working state is the low voltage state" can be found in the description of the embodiments shown in FIG. 6 and FIG. 7 above, which will not be repeated for the sake of conciseness.

In some possible implementations, the abnormal working state is a power-off state. That is to say, by controlling the old chip 211 to be powered off, it avoids the old chip 211 from responding to the task instruction sent by the host device 100.

In the embodiment of the present application, since the old chip 211 is in the power-off state during the processing of the first instruction by the patch chip 212, that is, the power consumption of the old chip 211 is 0, the overall power consumption of the chip assembly 210 is basically the same as that of a single patch chip 212. Therefore, this solution can further reduce the overall power consumption of the chip assembly 210. Therefore, this scheme is particularly suitable for the application scenarios that is sensitive for power consumption.

The specific implementation method of "the abnormal working state is the power-off state" can be found in the descriptions of the embodiments shown in FIG. 14 and FIG.15 above, which will not be repeated for the sake of conciseness.

Step S1804: the patch chip 212 sends the first response data to the host device 100.

In the embodiment of the present application, if the patch chip 212 determines that the task instruction sent by the host device 100 is the first instruction, the patch chip 212 sends the first response data to the host device 100, that is, the patch chip 212 responds to the first instruction. In a specific implementation, the first response data is usually the reset data stored in patch chip 212, which is the reset data for the invalid data in the old chip 211. It can be understood that the reset data is in a valid state.

For example, remaining service life data stored in the old chip 211 is "0" (invalid data), and remaining service life data stored in the patch chip 212 is "100%" (reset data). When the first instruction sent by host device 100 to the chip assembly 210 is an instruction for acquiring remaining service life data, the patch chip 212 sends "100%" to the host device 100 to indicate that the remaining service life of replaceable accessory 200 currently is 100%.

It can be understood that with the use of the replaceable accessory 200, the reset data in the patch chip 212 will also change accordingly, but the invalid data in the old chip 211 usually will not change again. For example, the remaining service life data stored in patch chip 212 is "100%". As the replaceable accessory 200 is used, the reset data in the patch chip 212 may gradually decrease, for example, to 99%, 98%, 97%, and etc. However, since the remaining service life data "0" in the old chip 211 is already at its minimum value, the remaining service life data in the second chip usually does not change again with the use of the replaceable accessory 200.

Step S1805: if the task instruction sent by the host device 100 is the second instruction, sending the first control signal to the old chip 211, so that the old chip 211 is in a normal working state.

It can be understood that when the task instruction sent by the host device 100 is the second instruction, the old chip 211 needs to respond. Therefore, the first control signal is sent to the old chip 211 to keep the old chip 211 in the normal working state.

As mentioned above, during normal working operation, the patch chip 212 usually maintains the state of sending the first control signal to the old chip 211, so that the old chip 211 has the ability to receive the task instruction sent by the host device 100. That is, the patch chip 212 is currently in the state of sending the first control signal to the old chip 211. Therefore, in the embodiment of the present application, "sending the first control signal to the old chip 211" specifically means maintaining the state of sending the first control signal to the old chip 211. Of course, in another application scenario, the patch chip 212 may also currently be in a state of stopping sending the first control signal to the old chip 211. Correspondingly, "sending the first control signal to the old chip 211" specifically means that the patch chip 212 switches from "stopping sending the first control signal to the old chip 211" to "sending the first control signal to the old chip 211".

Step S1806: the old chip 211 sends second response data to the host device 100.

In the embodiment of the present application, if the patch chip 212 determines that the task instruction sent by the host device 100 is the second instruction, it sends the first control signal to the old chip 211, so that the old chip 211 is in the normal working state. According to the program setting in the old chip 211, after receiving the second instruction, the old chip 211 may send the second response data to the host device 100. It can be understood that the patch chip 212 will no longer respond to the second instruction at this time. It should be pointed out that the old chip 211 can directly send the second response data to the host device 100 without the forwarding of the patch chip 212, and therefore does not require the patch chip 212 to perform protocol conversion and other related operations. Therefore, it can improve the response speed of the chip assembly 210.

In a specific implementation, the second response data is usually data stored in the old chip 211 for authentication and/or encryption, such as, identity data and/or encrypted data. Among them, the identity data may include a serial number, and etc.; and the encrypted data may include an encrypted seed and a counter value corresponding to the encrypted seed.

For example, table 1 shows the encrypted data stored in the old chip 211.

**Table 1:**

| Encrypted seed | Counter value |
|---|---|
| 3D 02 B8 C1 | 00 05 |
| 3D 5A 70 C1 | 00 00 |
| 3D E0 66 C1 | 00 FE |
| 3D 09 0F C1 | 00 90 |

As shown in table 1, the encrypted data includes multiple sets of encrypted seeds and counter values. Among them, each encrypted seed corresponds to a counter value, and the counter value is used to record the number of times the encrypted seed is accessed. The initial value of the counter value is usually 0, and the counter value corresponding to the encrypted seed is incremented by 1 every time the encrypted seed is accessed. For example, the counter value corresponding to the encrypted seed [3D E0 66 C1] is [00 FE], that is, the number of times the encrypted seed [3D E0 66 C1] is accessed is [00 FE]. When the encrypted seed [3D E0 66 C1] is accessed again, the corresponding counter value [00 FE] is incremented by 1, and the updated counter value is [00 FF]. In the embodiment of the present application, since the counter value corresponding to the encrypted seed stored in the old chip 211 has not yet reached the maximum value, the encrypted data stored in the old chip 211 is still usable, that is, valid data.

It should be pointed out that table 1 is only an exemplary explanation of the encrypted seed and the counter value in the embodiment of the present application. In a practical application, the old chip 211 may store more or fewer encrypted seeds and counter values, and the embodiments of the present application do not make specific limitations on this.

When the second instruction sent by the host device 100 to the chip assembly 210 is an instruction for acquiring encrypted data, the old chip 211 sends a set of an encrypted seed and a counter value to the host device 100. The host device 100 generates a session key (session key) based at least on the encrypted seed and the counter value, and sends the session key to the patch chip 212 and the old chip 211. Afterwards, the patch chip 212 and the old chip 211 can perform encrypted communication with the host device 100 based on the session key. In addition, during the process of generating the session key, the host device 100 may also need to use other data, such as, a random number, which is not specifically limited in the embodiment of the present application.

In a possible application scenario, if the counter value corresponding to the encrypted seed stored in the old chip 211 reaches the maximum value, it will result in the unavailability of the encrypted data stored in the old chip 211. At this point, the encrypted data in the old chip 211 is invalid and needs to be reset, the reset encrypted data should be stored in the patch chip 212, and then the patch chip 212 will respond to the instruction related to the encrypted data in the subsequent work process. That is to say, in the embodiment of the present application, the reset data stored in the patch chip 212 may also include encrypted data. Regarding the response process of the chip assembly 210 to the reset encrypted data, please refer to the description above, which will not be repeated for the sake of conciseness.

In the embodiment of the present application, when the task instruction sent by the host device 100 is the first instruction, the old chip 211 is controlled to enter the abnormal working state, and the patch chip 212 responds to the first instruction; when the task instruction sent by the host device 100 is the second instruction, the old chip 211 is controlled to enter the normal working state, and the old chip 211 responds to the second instruction. Due to the fact that the old chip 211 can directly respond to the second instruction without requiring the patch chip 212 for forwarding, there is no need for the patch chip 212 to perform protocol conversion and another related operation. Therefore, the response speed of the chip assembly 210 can be improved.

In addition, in the embodiment of the present application, since the old chip 211 may directly respond to the second instruction without requiring the patch chip 212 for forwarding, protocol conversion and another operation, the power consumption of the chip assembly 210 can be reduced.

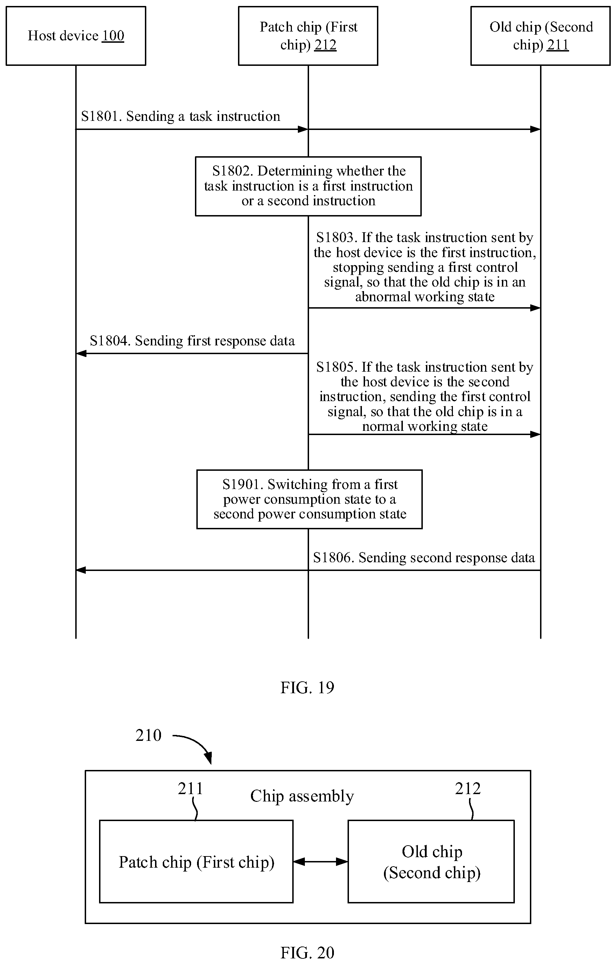

Referring to FIG. 19, which is a schematic flowchart of another communication method provided in an embodiment of the present application. As shown in FIG. 19, the difference between the embodiment of the present application and the embodiment shown in FIG. 18 is that after step S1805, the following steps are further included.

Step S1901: the patch chip 212 switches from a first power consumption state to a second power consumption state.

In the embodiment of the present application, if the patch chip 212 determines that the task instruction sent by the host device 100 is the second instruction, that is, an instruction that requires the old chip 211 to respond, it will switch from the first power consumption state to the second power consumption state. Among them, a power consumption in the first power consumption state is greater than that in the second power consumption state. That is to say, if the patch chip 212 determines that the task instruction sent by host device 100 is an instruction that requires the old chip 211 to respond, it will reduce its own power consumption, thereby reducing the power consumption of the entire chip assembly 210 and meeting the power consumption requirement of the host device 100 for the chip assembly 210. In a specific implementation, in the second power consumption state, the patch chip 212 can reduce the power consumption by lowering an operating frequency; or some energy consuming modules in the patch chip 212 may be turned off to reduce the power consumption.

It can be understood that when the patch chip 212 in the second power consumption state receives the second instruction sent by host device 100 again, the patch chip 212 continues to maintain the second power consumption state. When 2 receives the first instruction sent by the host device 100, it switches from the second power consumption state to the first power consumption state, so that the patch chip 212 may respond to the first instruction normally.

In a possible implementation, the patch chip 212 is further used to control a total power consumption of the patch chip 121 and the old chip 211 to remain within a preset power consumption range. It can be understood that the total power consumption of the patch chip 121 and the old chip 211 is the power consumption of the chip assembly 210. Specifically, it can be achieved by adjusting a power consumption of a power consumption configuring unit itself, which will be explained in detail below.

Corresponding to the above embodiments, the present application further provides a patch chip. The specific content about the patch chip can be found in the description of the above embodiments, which will not be repeated for the sake of conciseness.

Corresponding to the above embodiments, the present application further provides an old chip. The specific content about the old chip can be found in the description of the above method implementation examples, which will not be repeated for the sake of conciseness.

Corresponding to the above embodiments, the present application further provides a chip assembly.

Referring to FIG. 20, which is a structural block diagram of a chip assembly provided in an embodiment of the present application. As shown in FIG. 20, the chip assembly 210 includes a patch chip 212 and an old chip 211, with the patch chip 212 being communicatively connect with the old chip 211. Among them, the specific contents of the patch chip 212 and the old chip 211 can be found in the description of the above embodiments, which will not be repeated for the sake of conciseness.

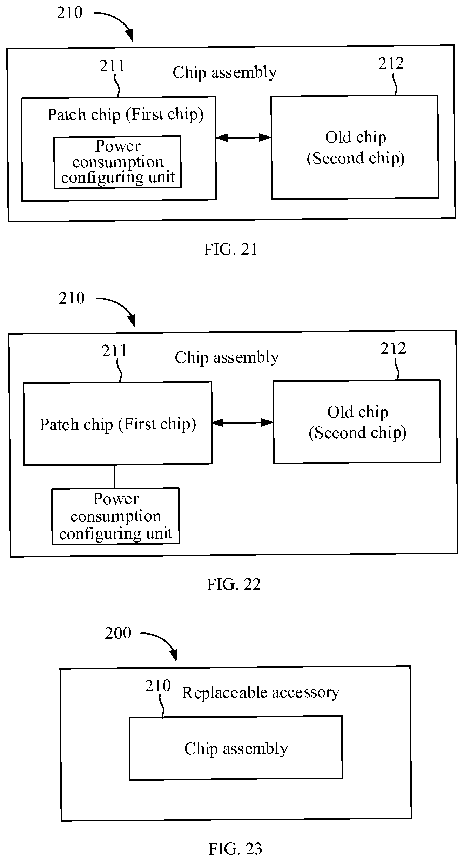

Referring to FIG. 21, which is a structural block diagram of another chip assembly provided in an embodiment of the present application. As shown in FIG. 21, the difference between the embodiment of the present application and the embodiment shown in FIG. 7 is that a power consumption configuring unit is further provided in the patch chip 212.

In some application scenarios, the host device 100 typically requires the power consumption of the chip assembly 210 to be constant and within a preset range. In the response solution of the chip assembly 210 to the task instruction provided in the embodiment of the present application, the chip assembly 210 needs to switch between different working states according to the type of the task instruction. Specifically, when the task instruction is the first instruction, the patch chip 212 responds to the first instruction; when the task instruction is the second instruction, the old chip 211 responds to the second instruction. Due to the fluctuation of power consumptions caused by the switching of the chip assembly 210 between different working states, it may lead to the host device 100 determining that the chip assembly 210 on the communication bus is abnormal, causing the chip assembly 210 to malfunction.

In response to this issue, the embodiment of the present application arranges a power consumption configuring unit in the chip assembly 210, which can adjust its own power consumption to maintain the power consumption of the chip assembly 210 within the preset power consumption range, thereby meeting the power consumption requirement of the host device 100 for the chip assembly 210. Specifically, when the power consumption of the patch chip 212 and the old chip 211 increases, its own power consumption is reduced; when the power consumption of the patch chip 212 and the old chip 211 decreases, its own power consumption is increased. By the above control method, the power consumption of the chip assembly 210 is kept within the preset power consumption range.

In a specific implementation, the power consumption configuring unit may include a variable resistor, and the patch chip 212 can control the resistance value of the variable resistor to adjust the power consumption of the power consumption configuring unit. Of course, the person skilled in the art can set other types of power consumption configuring units according to actual needs, and the embodiments of the present application do not make specific limitations on this.

Referring to FIG. 22, which is a structural block diagram of another chip assembly provided in an embodiment of the present application. As shown in FIG. 22, the difference between the embodiment of the present application and the embodiment shown in FIG. 21 is that the power consumption configuring unit is set outside the patch chip 212. That is to say, the power consumption configuring unit may be set inside or outside the patch chip 212, and the embodiments of the present application do not make specific limitations on this.

Corresponding to the above embodiments, the present application further provides a replaceable accessory.

Referring to FIG. 23, which is a structural block diagram of a replaceable accessory provided in an embodiment of the present application. As shown in FIG. 23, the replaceable accessory 200 includes a chip assembly 210. Among them, the specific content of chip assembly 210 can be found in the description of the above embodiment, which will not be repeated for the sake of conciseness.

Corresponding to the above embodiments, the present application further provides a computer-readable storage medium, where the computer-readable storage medium can store a program, and during program execution, a device on which the computer-readable storage medium is located can be controlled to perform some or all of the steps in the above method embodiments. In a specific implementation, the computer-readable storage medium may be a magnetic disk, an optical disk, a read-only memory (English: read-only memory, ROM for short), or a random access memory (English: random access memory, RAM for short), etc.

Corresponding to the above embodiments, the present application further provides a computer program product including executable instructions that, when executed on a computer, cause the computer to perform some or all of the steps in the above method embodiments.

In the embodiments of the present application, "at least one" refers to one or more, and "multiple" refers to two or more. "And/or" describes the association relationship of associated objects, indicating that there can be three types of relationships, for example, A and/or B, which can represent situations where A exists alone, A and B exist simultaneously, or B exists alone. A and B may be singular or plural. The character "/" generally indicates that associated objects before and after is an "or" relationship. "At least one of the following" and similar expressions refer to any combination of these items, including any combination of singular or plural items. For example, at least one of a, b, and c may represent: a, b, c, a-b, a-c, b-c, or a-b-c, where a, b, and c may be single or multiple.

The person skilled in the art can realize that various units and algorithm steps described in the embodiments disclosed in this specification can be implemented through a combination of an electronic hardware, a computer software, and an electronic hardware. Whether these functions are executed in hardware or software depends on the specific application and design constraints of the technical solution. The professional technician can use different methods to achieve the described functions for each specific application, but such implementation should not be considered beyond the scope of the present application.

The person skilled in the art can clearly understand that, for the sake of convenience and conciseness in description, the specific working processes of the system, the device, and the unit described above can refer to the corresponding processes in the aforementioned method embodiments, which will not be repeated here.

In the several embodiments provided in the present application, any function implemented in the form of a software functional unit and sold or used as an independent product may be stored in a computer-readable storage medium. Based on this understanding, the technical solution of the present application essentially or partially contributes to the prior art or embodied may be in the form of a software product, which is stored in a storage medium and includes several instructions for a computer device (which may be a personal computer, a server, or a network device, etc.) to perform all or part of the steps of the methods described in various embodiments of the present application. The above storage medium includes various medium that can store program codes, such as a USB flash drive, a portable hard drive, a read-only memory (English: read-only memory, ROM for short), a random access memory (English: random access memory, RAM for short), a magnetic disk, or an optical disk.

The above is only a specific implementation method of the present application. Any skilled person familiar with the art can easily think of a change or a replacement within the technical scope disclosed in the present application, which should be included in the protection scope of the present application. The protection scope of the present application shall be subject to the protection scope of the claims.

## Claims

1. A first chip, configured to communicatively connect with a host device and a second chip respectively, wherein the host device is configured to send a task instruction, the task instruction comprises a first instruction and a second instruction, wherein the first chip is configured to:
stop sending a first control signal to the second chip when receiving the first instruction sent by the host device, so that the second chip is in an abnormal working state, and the first chip responds to the first instruction; and
send the first control signal to the second chip when receiving the second instruction sent by the host device, so that the second chip is in a normal working state, and the second chip responds to the second instruction;
wherein the second chip in the abnormal state is unable to respond to the task instruction sent by the host device.

2. The first chip according to claim 1, wherein the first chip is further configured to:
control a total power consumption of the first chip and the second chip to remain within a preset power consumption range.

3. The first chip according to claim 1, comprising:
a first terminal, wherein the first terminal of the first chip is configured to electrically connect with a first terminal of the host device to form a first line between the first terminal of the first chip and the first terminal of the host device;
a second terminal, wherein the second terminal of the first chip is configured to electrically connect with a second terminal of the host device, to form a second line between the second terminal of the first chip and the second terminal of the host device; and
a third terminal, wherein the third terminal of the first chip is configured to electrically connect with a first terminal of the second chip, and a second terminal of the second chip is configured to electrically connect with the first line or the second line;
wherein the first chip is configured to: receive the task instruction sent by the host device through the first terminal of the first chip or the second terminal of the first chip, when the task instruction is the first instruction, the third terminal of the first chip stops sending the first control signal to the first terminal of the second chip, so that the second chip is in the abnormal working state, and first response data is sent from the first terminal of the first chip and/or the second terminal of the first chip to the host device; when the task instruction is the second instruction, the third terminal of the first chip sends the first control signal to the first terminal of the second chip, so that the second chip is in the normal working state, and second response data is sent from the second terminal of the second chip to the host device.

4. The first chip according to claim 3, further comprising:
a voltage adjusting module; and
a processing module, wherein a first output terminal of the processing module is electrically connected with the third terminal of the first chip, and a second output terminal of the processing module is electrically connected with the third terminal of the first chip through the voltage adjusting module; the processing module is configured to: when receiving the first instruction sent by the host device, lead the second output terminal of the processing module to send a second control signal to the third terminal of the first chip through the voltage adjusting module, so that the first terminal of the second chip receives the second control signal; when receiving the second instruction sent by the host device, lead the first output terminal of the processing module to send the first control signal to the third terminal of the first chip, so that the first terminal of the second chip receives the first control signal;
wherein the second chip is unable to respond to the task instruction when receiving the second control signal.

5. The first chip according to claim 4, wherein the voltage adjusting module comprises a resistance component and/or a semiconductor component.

6. The first chip according to claim 3, wherein
the first chip further comprises an adapter terminal, and the adapter terminal of the first chip is electrically connected with the first terminal of the first chip or the second terminal of the first chip;
the second terminal of the second chip being configured to electrically connect with the first line or the second line comprises: the second terminal of the second chip being configured to electrically connect with the adapter terminal of the first chip.

7. The first chip according to claim 3, wherein the second terminal of the second chip being configured to electrically connect with the first line or the second line comprises:
the second terminal of the second chip being configured to electrically connect with the first terminal of the first chip or the second terminal of the first chip through a connecting wire.

8. The first chip according to claim 3, wherein the second terminal of the second chip being configured to electrically connect with the first line or the second line comprises:
the second terminal of the second chip being configured to electrically connect with the first terminal of the host device or the second terminal of the host device through a connecting wire.

9. The first chip according to claim 3, wherein when the second terminal of the second chip is configured to electrically connect with the first line,
the third terminal of the first chip stopping sending the first control signal to the first terminal of the second chip comprises: controlling the second terminal of the first chip and the third terminal of the first chip to be electrically insulated, so that the third terminal of the first chip stops sending the first control signal to the first terminal of the second chip;
the third terminal of the first chip sending the first control signal to the first terminal of the second chip comprises: controlling the second terminal of the first chip and the third terminal of the first chip to be electrically connected, so that the third terminal of the first chip sends the first control signal to the first terminal of the second chip.

10. The first chip according to claim 9, further comprising:
a first switch, wherein the first switch is configured to control the second terminal of the first chip and the third terminal of the first chip to switch between being electrically connected and being electrically insulated.

11. The first chip according to claim 3, wherein when the second terminal of the second chip is configured to electrically connect with the second line,
the third terminal of the first chip stopping sending the first control signal to the first terminal of the second chip comprises: controlling the first terminal of the first chip and the third terminal of the first chip to be electrically insulated, so that the third terminal of the first chip stops sending the first control signal to the first terminal of the second chip;
the third terminal of the first chip sending the first control signal to the first terminal of the second chip comprises: controlling the first terminal of the first chip and the third terminal of the first chip to be electrically connected, so that the third terminal of the first chip sends the first control signal to the first terminal of the second chip.

12. The first chip according to claim 11, further comprising:
a second switch, wherein the second switch is configured to control the first terminal of the first chip and the third terminal of the first chip to switch between being electrically connected and being electrically insulated.

13. The first chip according to claim 1, wherein
a first terminal of the first chip is configured to receive a first voltage output from a first terminal of the host device, and a second terminal of the first chip is configured to receive a second voltage output from a second terminal of the host device;
wherein the first voltage is a power supply voltage and the second voltage is a ground voltage; or the first voltage is the ground voltage and the second voltage is the power supply voltage.

14. A chip assembly, comprising:
the first chip according to any one of claims 1 to 13;
a second chip;
wherein the first chip and the second chip are communicatively connected.

15. A replaceable accessory for detachable installation on a host device, wherein the replaceable accessory comprises:
the chip assembly according to claim 14.

16. A communication method applied to a first chip, wherein the first chip is configured to communicatively connect with a host device and a second chip respectively, the host device is configured to send a task instruction, the task instructions comprise a first instruction and a second instruction, wherein the method comprises:
stopping sending a first control signal to the second chip when receiving the first instruction sent by the host device, so that the second chip is in an abnormal working state, and the first chip responds to the first instruction;
sending the first control signal to the second chip when receiving the second instruction sent by the host device, so that the second chip is in a normal working state, and the second chip responds to the second instruction;
wherein the second chip in the abnormal state is unable to respond to the task instruction sent by the host device.
